# EUROPEAN PATENT SPECIFICATION

(11) **EP 3 179 867 B1**
(45) Date of publication and mention of the grant of the patent: **16.05.2018**
(21) Application number: 15766635.5
(22) Date of filing: 13.08.2015
(51) Int. Cl.: A23L 27/30, A23L 29/30, A23L 2/60

(54) **SWEETENER COMPOSITION**
SÜSSSTOFFZUSAMMENSETZUNG
COMPOSITION D'ÉDULCORANT

(30) Priority: 13.08.2014 IT MI20141492
(43) Date of publication of application: 21.06.2017
(73) Proprietor: Pintori, Antonio, 08100 Nuoro (NU) (IT)
(72) Inventor: Pintori, Antonio, 08100 Nuoro (NU) (IT)
(74) Representative: Fiorentino, Luca
(86) International application number: PCT/IB2015/056161
(87) International publication number: WO 2015/193869

(56) References cited:
- WO-A1-2011/017144
- WO-A1-2013/096242
- DE-U1-202012 007 370
- GB-A- 2 086 203
- US-A1- 2012 189 560
- DATABASE WPI Week 201423 Thomson Scientific, London, GB; AN 2012-G28719 XP002738529, & CN 102 450 624 A (NEWWAY WUHAN BIOTECHNOLOGY CO LTD) 16 May 2012 (2012-05-16)
- DATABASE WPI Week 198523 Thomson Scientific, London, GB; AN 1985-138871 XP002503902, & JP S60 75252 A (SEKISUI CHEM IND CO LTD) 27 April 1985 (1985-04-27)

## Description

### Technical field of the invention

The present invention relates to new sweetener compositions and their use to replace sugar (sucrose) in the preparation of sweetened compositions or products, namely all those edible compositions or products meant to be taken or ingested orally, or at any rate usable in the oral cavity, such as: foods, drinks, pharmaceuticals, tobacco products, nutraceuticals and preparations for oral hygiene and/or beauty treatment; sweetened with the sweetener composition covered by the present invention, as well as said products or compositions thus sweetened.

### State of the art

High-calorie natural sugars such as sucrose, glucose or fructose are widely used for their pleasant taste in the industry of oral beauty treatment and hygiene, in the industry of foods and drinks as well as in the pharmaceutical industry. Although sucrose, normally designated with the generic name "sugar", provides the products where it is used with a taste which is particularly appreciated by consumers, giving them the best possible features of sweetness, it is the highest-calorie of the industrially used sweeteners. Although calories are needed for the main physiological functions of the human bodies, the requirement has long been felt to make available on the market and on an industrial scale calorie-free or low-calorie sweeteners whose taste is as similar as possible to that of sugar for consumers who lead a sedentary lifestyle or who are particularly aware of the calorie intake of food. To this end, several kinds of sweeteners of both synthetic and natural origin have been developed over the years, all having a higher sweetening power, ranging from 10 to 40,000 times that of sugar or sucrose and all characterized by a lower calorie intake.

Among the former, intensive and synthetic sweeteners such as Acesulfame K, Aspartame , Aspartame-Acesulfame Salts, Cyclamate, Saccharin, Sucralose, Thaumatin, Neohesperidin DC, Ne-otame, Advantame may be mentioned, which have long been compliant with applicable rules.

In spite of this, consumers are somewhat reluctant to use them.

Sweeteners of natural origin such as polyalcohols are preferred, although they generally have a lower sweetening power compared to sucrose or sugar, even if they are characterized by a considerably lower calorie intake than the latter. All these polyalcohols have as main contraindication, to a greater or lesser extent, laxative effects, if consumed in large amounts.

Over the past years, the effort was made to mix these polyalcohols with other highly sweetening natural sweeteners in order to limit the amount of said polyalcohols although achieving an adequate sweetening effect to replace sugar or sucrose.

Highly sweetening natural sweeteners which have raised particular interest are extracts of Stevia plant such as steviol glycosides named Stevioside, Rebaudioside (A,B,D,E) and Dulcoside (A and B).

Several patent applications have as their object sweetener compositions to be used as an alternative to sugar or sucrose, centred on Rebaudioside A, wherein, in order to overcome the drawback of an unpleasant liquorice aftertaste, a persistent sweetness, which are specific of Rebaudioside A, so as to achieve an improved sweetness, in terms of both taste and time, resembling as much as possible those of sugar, rebaudioside A is always combined with erythritol, to which at least one third component such as a polyalcohol is added from time to time.

The combination which is always present as an indispensable condition for a valid sweetening action on foodstuff, even if subjected to cooking, of rebaudioside A with erythritol is mentioned in several patent applications such as WO2007061873, WO2007061795, WO2007061757 and WO2007061898.

In these several patent applications the basic association of rebaudioside A and erythritol is accompanied from time to time by at least one further component, a polyalcohol which varies from time to time and wherein weight ratios between said components, bounding for an effective sweetening action, tend to change.

In addition, the applicant found out that erythritol, when used for sweetening foodstuff designed to be cooked before consumption, deeply alters the taste properties thereof.

CN102450624 describes a sweetener comprising a rebaudioside A, a sugar alcohol such as maltitol or xylitol, and mogroside V. It was hence a strongly felt need to achieve new sweetener compositions which might fully replace sugar or sucrose not only obtaining, the weight being equal to that of the replaced sucrose, an equivalent sweetening power, against a definitely lower calorie intake and also a strongly reduced glycemic and insulinemic impact, but at the same time, although solving the drawbacks of metallic, astringent, sour or excessively persistent sweetness, able to provide an immediate sweetening answer by finding an application in sweetening indistinctly any kind of products where sugar is used, edible products or products designed to be taken or ingested orally, or at any rate usable in the oral canal such as: foods, drinks, pharmaceuticals, tobacco products, nutraceuticals and preparations for oral hygiene and/or beauty treatment.

It was hence a strongly felt need to achieve new sweetener compositions which might fully replace sugar or sucrose not only obtaining, the weight being equal to that of the replaced sucrose, an equivalent sweetening power, but against a definitely lower calorie intake and also a strongly reduced glycemic and insulinemic impact, to be used for sweetening any edible or ingestible product playing the main sweetening function and, in the event of foodstuff and drinks, without altering the organoleptic properties or changing the taste thereof, as well as a sweetener composition which may be used in sweetening edible or ingestible products regardless of the temperature at which said products are manufactured, processed, preserved, administered or consumed.

### Summary of the invention

Continuing research in the present technical field, the applicant has surprisingly and unexpectedly implemented a sweetener composition replacing sucrose which, the weight being equal to that of the replaced sucrose, has the same sweetening power in a 1/1 ratio, said composition comprising a sweetening blend with at least three components selected from: Maltitol, Xylitol and Rebaudioside A, the latter having a purity ranging from 80% to 100% by weight on the anhydrous basis, or preferably a purity ranging from 90% to 100% by weight on the anhydrous basis, or even more preferably a purity ranging from 97% to 100% by weight on the anhydrous basis, wherein:
Rebaudioside A is present in an amount ranging from 310 to 700 ppm (parts per million) of the sweetening blend with at least three components;
Xylitol is present in an amount ranging from 35,000 to 700,000 ppm (parts per million) of the sweetening blend with at least three components;
Maltitol is present in an amount ranging from 320,000 to 970,000 ppm (parts per million) of the sweetening blend with at least three components;
the sum of the amounts of the three components of the sweetening blend being equal to the same amount by weight of sucrose and such as to achieve the same sweetening power as sucrose, hence in a 1/1 ratio.

A further object of the present invention is:
- the use of the sweetener composition as described herein to sweeten a product or composition which is edible or meant to be taken or ingested orally, or at any rate usable in the oral cavity, such as: foods, drinks, pharmaceuticals, tobacco products, nutraceuticals and preparations for oral hygiene and/or beauty treatment; and
- a sweetened product or a sweetened composition which is edible or meant to be taken or ingested orally or at any rate usable in the oral canal, such as: foods, drinks, pharmaceuticals, tobacco products, nutraceuticals and preparations for oral hygiene and/or beauty treatment, said sweetened product or composition comprising a sweetened composition according to the present invention.

### Brief description of the figures

Figure 1: spider chart of the sensory profiles of sponge cakes B1, B2, B3 and B4;
Figure 2: vertical bar charts of the rank sum sorting tests of sponge cakes B1, B2, B3 and B4, wherein the non-significance ranges and the summary sensory parameters: "sweetness perception", "taste pleasantness", "structure pleasantness" and "overall pleasantness" are listed;
Figure 3: spider chart of the sensory profiles of pastry creams D1, D2, D3 and D4;
Figure 4: vertical bar charts of the rank sum sorting tests of pastry creams D1, D2, D3 and D4, wherein the non-significance ranges and the summary sensory parameters: "sweetness perception", "taste pleasantness", "structure pleasantness" and "overall pleasantness" are listed;
Figure 5: spider chart of the sensory profiles of syrups (confectionery dipping sauce) E1, E2, E3 and E4;
Figure 6: vertical bar charts of the rank sum sorting tests of syrups (confectionery dipping sauce) E1, E2, E3 and E4, wherein the non-significance ranges and the summary sensory parameters: "sweetness perception", "taste pleasantness", "structure pleasantness" and "overall pleasantness" are listed;
Figure 7: spider chart of the sensory profiles of ice-creams C1, C2, C3 and C4;
Figure 8: vertical bar charts of the rank sum sorting tests of ice-creams C1, C2, C3 and C4, wherein the non-significance ranges and the summary sensory parameters: "sweetness perception", "taste pleasantness", "structure pleasantness" and "overall pleasantness" are listed.

### Detailed description of the invention

An object of the present invention is therefore a sweetener composition replacing sucrose which, the amount of weight being equal to that of the replaced sucrose, has the same sweetening power in a 1/1 ratio, said composition comprising a sweetening blend with at least three components selected from: Maltitol, Xylitol and Rebaudioside A, the latter having a purity ranging from 80% to 100% by weight on the anhydrous basis, or preferably a purity ranging from 90% to 100% by weight on the anhydrous basis, or even more preferably a purity ranging from 97% to 100% by weight on the anhydrous basis, wherein:
- Rebaudioside A is present in an amount ranging from 310 to 700 ppm (parts per million) of the sweetening blend with at least three components;
- Xylitol is present in an amount ranging from 35,000 to 700,000 ppm (parts per million) of the sweetening blend with at least three components;
- Maltitol is present in an amount ranging from 320,000 to 970,000 ppm (parts per million) of the sweetening blend with at least three components;
the sum of the amounts of the three components of the sweetening blend being equal to the same amount by weight of sucrose and such as to achieve the same sweetening power as sucrose, hence in a 1/1 ratio.

A further, particularly preferred, form of embodiment of the object of the present invention is a:
Sweetener composition replacing sucrose which, the amount of weight being equal to that of the replaced sucrose, has the same sweetening power in a 1/1 ratio, comprising a sweetening blend with at least three components selected from: Maltitol, Xylitol and Rebaudioside A, the latter having a purity ranging from 80% to 100% by weight on the anhydrous basis, or preferably a purity ranging from 90% to 100% by weight on the anhydrous basis, or even more preferably a purity ranging from 97% to 100% by weight on the anhydrous basis, wherein:
- Rebaudioside A is present in an amount ranging from 310 to 690 ppm (parts per million) of the sweetening blend with at least three components;
- Xylitol is present in an amount ranging from 39,310 to 650,000 ppm (parts per million) of the sweetening blend with at least three components;
- Maltitol is present in an amount ranging from 349,690 to 960,000 ppm (parts per million) of the sweetening blend with at least three components;
the sum of the amounts of the three components of the sweetening blend being equal to the same amount by weight of sucrose and such as to achieve the same sweetening power as sucrose, hence in a 1/1 ratio.

Further particularly preferred forms of embodiment of the sweetener composition covered by the present invention are the sweetener compositions replacing sucrose which, the amount of weight being equal to that of the replaced sucrose, have the same sweetening power in a 1/1 ratio, comprising a sweetening blend with at least three components selected from: Maltitol, Xylitol and Rebaudioside A, the latter having a purity ranging from 80% to 100% by weight on the anhydrous basis, or preferably a purity ranging from 90% to 100% by weight on the anhydrous basis, or even more preferably a purity ranging from 97% to 100% by weight on the anhydrous basis, wherein:
- Rebaudioside A is present in an amount ranging from 590 to 690 ppm (parts per million) of the sweetening blend with at least three components;
- Xylitol is present in an amount ranging from 39,310 to 170,000 ppm (parts per million) of the sweetening blend with at least three components;
- Maltitol is present in an amount ranging from 829,410 to 960,000 ppm (parts per million) of the sweetening blend with at least three components;
   or
- Rebaudioside A is present in an amount ranging from 310 to 590 ppm (parts per million) of the sweetening blend with at least three components;
- Xylitol is present in an amount ranging from 170,000 to 650,000 ppm (parts per million) of the sweetening blend with at least three components;
- Maltitol is present in an amount ranging from 349,690 to 829,410 ppm (parts per million) of the sweetening blend with at least three components;
the sum of the amounts of the three components of the sweetening blend being equal to the same amount by weight of sucrose and such as to achieve the same sweetening power as sucrose, hence in a 1/1 ratio.

The sweetener composition as described and claimed herein, comprising a blend with three components of maltitol, xylitol and Rebaudioside A, features as the first immediate advantage the integral replacement of sugar or sucrose, so that, the weight being equal, any amount of sugar can be replaced by an identical amount of the sweetener composition, achieving the same sweetening power as the replaced sugar, but with a definitely lower calorie intake and also a strongly reduced glycemic and insulinemic impact (the glycemic index and the insulinemic index of the sweetening blend covered by the present invention correspond to about 1/3 of the glycemic and insulinemic indexes of sucrose) compared to the amount of the replaced sugar, as well as the additional advantage that the sweetening blend with the three components of maltitol, xylitol and Rebaudioside A is totally non-cariogenic, since all three of them are non-cariogenic. Moreover, the perfect comparability between the sweetener composition covered by the present invention and sugar or sucrose, due to the specific blend of the three components Maltitol, xylitol and Rabaudioside A (all sweeteners of natural origin and non-cariogenic), as described and claimed, allowing sugar to be replaced by an identical amount of the composition covered by the present invention, is confirmed in that said composition is usable, as sugar replacement, to sweeten compositions or products which are either edible or meant to be taken or ingested orally, or at any rate usable in the oral canal, such as: foods, drinks, pharmaceuticals, tobacco products, nutraceuticals and preparations for oral hygiene and/or beauty treatment, regardless of the temperature of manufacturing, processing and following storage of the above edible products sweetened with the sweetener composition covered by the present invention.

Indeed, the edible compositions or products as identified herein, sweetened with the sweetened composition covered by the present invention, are indistinguishable, from the standpoint of organoleptic properties, from those same edible compositions or products sweetened with sugar, the same amounts being used; and said impossibility to distinguish the organoleptic properties of the same edible compositions/products as identified herein, whether sweetened with the sweetener composition as described and claimed herein or sweetened with sugar, is independent from the temperature of manufacturing, processing and following storage of said edible compositions/products, whether sweetened with the sweetener composition covered by the present invention or sweetened with sugar.

This impossibility to distinguish compositions or products sweetened with sugar or sucrose and the same compositions or products sweetened with the composition covered by the present invention was experimentally confirmed by sensory analysis tests such as "triangle" tests performed at Bologna's CNR and "sensory profile" tests performed at the company Astra innovazione's premises.

The sweetener composition as described and claimed herein is such as to provide to edible compositions/products as described above, sweetened with the composition covered by the present invention, the same organoleptic properties which are provided to said edible compositions/products if sugar is used as sweetener in the same amount.

The ability of the sweetener composition covered by the present invention to provide to edible compositions/products the same organoleptic properties which are provided to the same edible compositions/products by the sugar which is replaced by the composition described and claimed herein is independent from the temperature of manufacturing, processing and following storage of the edible compositions/products as identified herein, sweetened with the sweetener composition covered by the present invention.

The sweetener composition covered by the present invention has features and peculiarities which make it particularly effective to replace sugar or sucrose, both as sweetener as such and for use to replace sugar or sucrose as sweetener in edible compositions or products meant to be taken or ingested orally, or at any rate usable in the oral canal, such as: foods, drinks, pharmaceuticals, tobacco products, nutraceuticals and preparations for oral hygiene and/or beauty treatment.

As highlighted above, the amount being equal, the sweetener composition covered by the present invention, although featuring the same sweetening power as sugar, has a definitely lower calorie intake than the amount of the replaced sugar and a strongly reduced glycemic and insulinemic impact is compared thereto.

Precisely because the sweetener composition covered by the present invention has the same sweetening power as sugar, based on the same amount, it is the ideal replacement of sugar or sucrose, because the use of the sweetener composition covered by the present invention, as an alternative to sugar in all those applications wherein it is used, entails the simple replacement with an equal, identical and corresponding amount (with a 1/1 ratio) compared to the amount of sugar used in the considered application.

A further advantage, as surprising and unexpected as the advantages described above and closely related to the specific features of the sweetener composition covered by the present invention, is that said composition integrally replaces sugar or sucrose, providing to edible compositions/products sweetened with the sweetener composition described and claimed herein the same organoleptic properties which said edible compositions/products as specified herein have when they are sweetened with sugar or sucrose, based on the same amount and regardless of the temperature of manufacturing, processing and following storage of said sweetened products.

In actual fact, unlike other sweetener compositions, the one covered by the present invention replaces sugar or sucrose, reproducing the same organoleptic effects of the latter, where the present sweetener composition is used as an alternative to sugar, regardless of the temperature of manufacturing, processing and following storage of the compositions/products sweetened with the composition covered by the present invention.

According to the present invention, when the amounts of the three components of the sweetening blend are expressed as ppm or parts per million, said amounts are construed as being preferably expressed as parts per million by weight of each of the three components of the sweetening blend, namely Maltitol, Xylitol and Rebaudioside A compared to the overall weight of the sweetening blend they form.

"Rebaudioside A" according to the present invention is to be construed as Rebaudioside A, a Stevia extract having a sweetening power equalling or exceeding 270, preferably equalling or exceeding 320, even more preferably equalling or exceeding 350 times the sweetening power of sugar, with molecular weight M.W.: 967.01, CAS number 58543-16-1, having the empirical formula C₄₄H₇₀O₂₃, named 19-O-beta-glucopyranosyl-13-O-(beta-glucopyranosyl(1-2)-beta-glucopyranosyl(1-3))-beta-glucopyranosyl-13-hydroxykaur-16-en-19-oic acid or 13-[2-O-β-D-glucopyranosyl-3-O-β-D-glucopyranosyl-β-D-glucopyranosyl]oxy]kaur-16-en-18-oic acid, β-D-glucopyranosyl ester.

The structural formula of the compound Rebaudioside A according to the present invention is as follows:

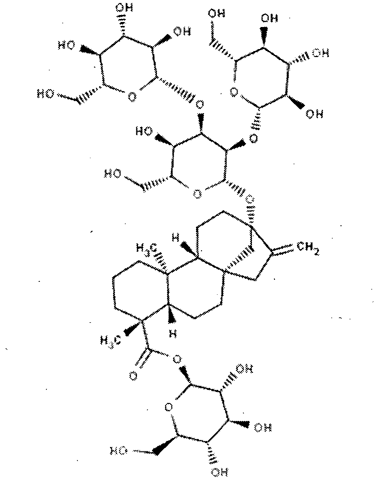

The Rebaudioside A or Stevia extract according to the present invention has a purity ranging from 80% to 100% by weight on the anhydrous basis, or preferably a purity ranging from 90% to 100% by weight on the anhydrous basis, or still more preferably a purity ranging from 97% to 100% by weight on the anhydrous basis of Rebaudioside A itself.

The Rebaudioside A or Stevia extract according to the present invention is an edible product easily retrievable on the market as natural sweetener, also commercially known as sweetener E 960, which can be purchased from several suppliers such as, in Italy, the company Stevia Italia. As a rule, it has the form of a fine white powder.

"Maltitol" and "Xylitol" according to the present invention are to be construed as sweetening polyols of natural origin and well known in the state of the art, both edible products respectively classified as sweetener E 965, with a nominal sweetening power equalling 0.75 (maltitol, having the empirical formula C₁₂H₂₄O₁₁, named 4-O-α-D-glucopyranosyl-D-glucitol and sweetener E 976, with a nominal sweetening power equalling 0.9 (Xylitol, having the empirical formula C₅H₁₂O₅, named (2*R*,3*R*,4*S*)-pentane-1,2,3,4,5-pentol)).

These are well-known natural sweeteners, easily retrievable on the market. These as well are in the form of fine crystal powders, both of them white.

The process of preparation of the sweetener composition according to the present invention comprises the mixing of Rebaudioside A, Maltitol and Xylitol, combining them with one another so that the sum of their weights is equivalent to the weight of the sucrose to be replaced and the sum of the corresponding sweetening powers (actual sweetening powers), achieved by multiplying the weights of Rebaudioside A, Maltitol and Xylitol, respectively, by the corresponding nominal sweetening powers, is equivalent to the sweetening power of the sucrose to be replaced, taking into account the dosing ratios of the three components to one another, the ratios by weight being expressed as parts per million compared to the overall weight of the sweetening blend they form.

Wishing to implement a sweetener composition according to the invention replacing 10 kg of sugar or sucrose, having a sweetening power of 10,000, ascribing to 1 gramme of sugar the relevant nominal sweetening power 1, the following amounts are achieved:

| Component | Amount gr | Nominal sweetening power | Actual sweetening power |
|---|---|---|---|
| Maltitol | 548.07 | 0.75 | 411.05 |
| Xylitol | 9,448.83 | 0.9 | 8,503.95 |
| Rebaudioside A | 3.1 | 350 | 1,085 |

| | | | |
|---|---|---|---|
| Tot. Am. 10,000.00 Tot. s. p. 10,000.00 Tot. Am. = Total amount Tot. s. p. = Total sweetening power | | | |

Since the three products Maltitol, Xylitol and Rebaudioside A consist in a powder with a very similar particle size, a mechanical mixing is accomplished until the components are distributed evenly, which is achieved without particular difficulty. The composition thus obtained is ready to be used, replacing the same amount of sugar in all the processes wherein the use of sucrose is envisaged.

A further object of the present invention is therefore a:
sweetened composition comprising a sweetenable composition and a sweetener composition, the latter replacing sucrose, which, the weight being equal to that of the replaced sucrose, has the same sweetening power in a 1/1 ratio, comprising a sweetening blend with at least three components selected from: Maltitol, Xylitol and Rebaudioside A, the latter having a purity ranging from 80% to 100% by weight on the anhydrous basis, or preferably a purity ranging from 90% to 100% by weight on the anhydrous basis, or even more preferably a purity ranging from 97% to 100% by weight on the anhydrous basis, wherein:
- Rebaudioside A is present in an amount ranging from 310 to 700 ppm (parts per million) of the sweetening blend with at least three components;
- Xylitol is present in an amount ranging from 35,000 to 700,000 ppm (parts per million) of the sweetening blend with at least three components;
- Maltitol is present in an amount ranging from 320,000 to 970,000 ppm (parts per million) of the sweetening blend with at least three components;
   or
- Rebaudioside A is present in an amount ranging from 310 to 690 ppm (parts per million) of the sweetening blend with at least three components;
- Xylitol is present in an amount ranging from 39,310 to 650,000 ppm (parts per million) of the sweetening blend with at least three components;
- Maltitol is present in an amount ranging from 349,690 to 960,000 ppm (parts per million) of the sweetening blend with at least three components;
the sum of the amounts of the three components of the sweetening blend being equal to the same amount by weight of sucrose and such as to achieve the same sweetening power as sucrose, hence in a 1/1 ratio.

A further object of the present invention is a sweetened product or a sweetened composition which is either edible or meant to be taken or ingested orally, or at any rate usable in the oral canal, such as: foods, drinks, pharmaceuticals, tobacco products, nutraceuticals and preparations for oral hygiene and/or beauty treatment, said sweetened product or composition comprising a sweetener composition, the latter replacing sucrose, which, the weight being equal to that of the replaced sucrose, has the same sweetening power in a 1/1 ratio, comprising a sweetening blend with at least three components selected from Maltitol, Xylitol and Rebaudioside A, the latter having a purity ranging from 80% to 100% by weight on the anhydrous basis, or preferably a purity ranging from 90% to 100% by weight on the anhydrous basis, or even more preferably a purity ranging from 97% to 100% by weight on the anhydrous basis, wherein:
- Rebaudioside A is present in an amount ranging from 310 to 700 ppm (parts per million) of the sweetening blend with at least three components;
- Xylitol is present in an amount ranging from 35,000 to 700,000 ppm (parts per million) of the sweetening blend with at least three components;
- Maltitol is present in an amount ranging from 320,000 to 970,000 ppm (parts per million) of the sweetening blend with at least three components;
   or
- Rebaudioside A is present in an amount ranging from 310 to 690 ppm (parts per million) of the sweetening blend with at least three components;
- Xylitol is present in an amount ranging from 39,310 to 650,000 ppm (parts per million) of the sweetening blend with at least three components;
- Maltitol is present in an amount ranging from 349,690 to 960,000 ppm (parts per million) of the sweetening blend with at least three components;
the sum of the amounts of the three components of the sweetening blend being equal to the same amount by weight of sucrose and such as to achieve the same sweetening power as sucrose, hence in a 1/1 ratio.

A further object of the present invention is the use of the sweetener composition according to the present invention to sweeten compositions or products which are either edible or meant to be taken or ingested orally, or at any rate usable in the oral cavity, such as: foods, drinks, pharmaceuticals, tobacco products, nutraceuticals and preparations for oral hygiene and/or beauty treatment.

According to the present invention, both sweetened and sweetenable composition(s) and both sweetened and sweetenable product(s) are to be construed as any composition or product known in the state of the art as being suitable to be sweetened in order to be edible or meant to be taken or ingested orally, or at any rate usable in the oral cavity. The term composition(s) or product(s) edible or meant to be taken or ingested orally, or at any rate usable in the oral cavity, as used so far, is to be construed as a composition or product comprising substances which come into contact with the human or animal mouth, including substances which are afterwards ejected from the mouth and substances which are drunk, eaten, dissolved or otherwise ingested, and are safe for human or animal consumption when they are used in a wide, generally acceptable range.

There are no restrictions on the kind of composition(s) or product(s) which are either edible or meant to be taken or ingested orally, or at any rate usable in the oral cavity, as envisaged in the embodiments of the present invention, provided they are safe for human consumption.

The following descriptions are to be construed by way of non-limiting examples, since the applicability of the sweetener composition covered by the present invention consists of the replacement with an equal, identical and corresponding (with a one/one ratio) amount compared to the sugar normally used in all the compositions or products which are either edible or meant to be taken or ingested orally, or at any rate usable in the oral cavity, whether they are classic recipes (known universally) or typical recipes (better known in the geographic areas of production).

The composition(s) or product(s) which are either edible or meant to be taken or ingested orally, or at any rate usable in the oral cavity as specified hereinafter include semi-finished products and/or products ready for consumption comprising all steps: weighing or dosing, mixing and further processing, bottling and/or packaging.

Both sweetenable and sweetened composition(s) and both sweetenable and sweetened product(s) according to the present invention are to be construed as all those compositions or products which are either edible or meant to be taken or ingested orally, or at any rate usable in the oral cavity, such as: foods, drinks, pharmaceuticals, tobacco products, nutraceuticals and preparations for oral hygiene and/or beauty treatment.

Non-limiting examples of composition(s) or product(s) which are either edible or meant to be taken or ingested orally, or at any rate usable in the oral cavity, sweetenable or sweetened with the sweetener composition covered by the present invention are: foods, drinks, pharmaceuticals, tobacco products, nutraceuticals and preparations for oral hygiene and/or beauty treatment; in particular:
- bakery products sweetenable by the sweetener composition according to the present invention comprise all/several groups: bread dough (for example, white bread, mixed bread, buns, hard rolls, doughnuts, pizza and flour tortillas), sweet dough (for example, Danish cookies, croissants, crackers, puff pastry, short pastry and biscuits) and batter (sweet fritters, baked cakes, sponge cakes, whipped shortbread cookies, cheesecakes, doughnuts, muffins, etc.);
- dough is to be construed as a kneading based on flours/starch, whereas batter is to be construed as a preparation with a higher content of water, milk, eggs or other liquid products such as juices, yoghurt, etc.;
- milk products;
- general condiments including soy sauce used as dressing on roasted meat, roasted chicken, charcoal grilled meat and the like, such as tomato or ketchup, sauces, stock for pastas and the like; animal products or seafood; processed meat products such as cured meats, for example sausage and the like; pickles, preserves of foodstuff cooked in soy sauce, delicacies, side dishes; snacks such as chips, biscuits or the like; cereal products; pharmaceuticals or pharmaceutical compositions comprising pharmaceutically active substances or pharmaceutically acceptable salts thereof, or else prodrugs which are administered orally or used in the oral canal (such as for example vitamins, cough syrups, cough drops, medicinal chewable tablets, aminoacids, antacids or the like), wherein the active substance may be in solid, liquid, gelly or gaseous form, such as a pill, tablet, spray, capsule, syrup, drop, crystal, powder and the like; personal care products such as the other oral composition used in the oral canal as agents for refreshing the mouth, gargling agents, mouth rinsing agents, toothpastes, tooth polishing agents, mouth sprays, tooth whitening agents and the like; dietary supplements; tobacco products, including unburned tobacco products; fodder; nutraceuticals, including any food or part of food which can offer medicinal or health benefits, including preventing and treating diseases (for example, cardiovascular diseases and high cholesterol, osteoporosis, inflammations or autoimmune disorders); non-limiting examples of nutraceuticals include natural food with a high content of nutritional substances or active medicinal substances, such as garlic, soy, antioxidants, phytosterols and phytostanols and esters thereof, fibres, glucosamine, chondroitin sulphate, ginseng, ginkgo, Echinacea, or the like; other nutrients which offer benefits for the health, such as aminoacids, vitamins, minerals, carotenoids, fibres, fatty acids such as omega-3 or omega-6 fatty acids, DHA, EPA or ALA which can originate from vegetable or animal sources (for example, salmon and other cold-water fish or algae), flavonoids, phenols, polyphenols (for example, catechins, proanthocyanidins, procyanidins, anthocyanes, anthocyanates, quercetin, resveratrol, isoflavones, curcumin, punicalagin, ellagic acids, citrus flavonoids such as hesperidin and naringin, chlorogenic acid), polyols, prebiotics / probiotics, phytoestrogens, sulphides / thiols, policosanols, saponin, rubisco peptides, appetite suppressants, hydrating agents, autoimmune agents, C-reactive protein, reducing agents or anti-inflammatory agents; or any other functional ingredient which is of use in treating specific diseases or conditions, such as osteoporosis, inflammations or cholesterol levels in the blood.

As regards foods and drinks sweetenable or sweetened with the sweetener composition covered by the present invention, the foods and drinks specific of the confectionery industry and handicraft production are particularly preferred and can be divided into:
a) bakery products, namely confectionery products obtained after baking;
b) confectionery products prepared at temperatures from 45°C to 180°C;
c) confectionery products and drinks prepared at temperatures from 0°C to 45°C;
d) confectionery products prepared at temperatures of 0°C or less;

### a) bakery products:

The following descriptions are to be construed by way of non-limiting examples, since the applicability of the sweetener composition covered by the present invention consists of the replacement with an equal, identical and corresponding (with a one/one ratio) amount compared to the sugar normally used in all the bakery products, whether they are classic recipes (known universally) or typical recipes (better known in the geographic areas of production). The percentage of the sweetener composition covered by the present invention to replace sugar must be readjusted exclusively when sweetening substances having a different sweetening power compared with common sugar are replaced, such as for example honey, treacle or other sweeteners of natural or synthetic origin; the same would apply if such sweetening substances were replaced with common sugar.

The bakery products mentioned below include semi-finished products and/or products ready for consumption comprising all the steps of their preparation: weighing or dosing, mixing and further processing, rising if needed, before-cooking finishing, cooking, after-cooking finishing and packaging.

Non-limiting examples of bakery products are:
BISCUITS such as: doughnuts, shortbread cookies (butter biscuits), Lady's kisses (almond pastries), meringues, ladyfingers (egg sponge cookies), petit fours, macaroons, hard almond biscuits (cantucci), traditional Monferrato biscuits "krumiri", pine nut biscuits, aniseed biscuits, orange cookies, "brutti ma buoni" biscuits, cat's tongue cookies, tartlets, "tegoline", whipped shortbread cookies; CAKES such as: sponge cakes, jam tarts, apple pies, Naples' traditional ricotta cake ("pastiera"), plumcakes, strudels, ricotta cake, yoghurt cake, almond cake, Mantua's crumbly almond cake "sbrisolona", Sachertorte, small doughnuts, cheesecakes, etc.; YEAST-RISEN PASTRY such as: traditional Christmas cake "panettone", traditional Christmas cake "pandoro", "veneziana" cake, croissants, Danish butter cookies, muffins, buns, brioches, crackers, etc.; WAFERS TO BE FILLED such as: cannoli, puff pastries, fan-shaped puff pastries, choux pastry profiterole shells, short pastry bases.

The bakery products sweetenable or sweetened with the sweetener composition covered by the present invention comprise: the sweetener composition covered by the present invention, replacing sugar or sucrose, generally in combination with water, fat, flour/starch, whole eggs or separated eggs (egg yolk or egg white or egg yolk and egg white in percentages other than in the whole egg), milk, dried fruits such as almonds, nuts, hazelnuts, pistachios, peanuts, etc., yeasts of a chemical or biological nature, additives required in the countries of production and all the ingredients not being described present in the recipe.

### b) confectionery products prepared at temperatures from 45°C to 180°C:

The following descriptions are to be construed by way of non-limiting examples, since the applicability of the sweetener composition covered by the present invention consists of the replacement with an equal, identical and corresponding (with a one/one ratio) amount compared to the sugar normally used in all the confectionery products prepared at temperatures from 45°C to 180°C, whether they are classic recipes (known universally) or typical recipes (better known in the geographic areas of production).

The percentage of the sweetener composition covered by the present invention to replace sugar must be readjusted exclusively when sweetening substances having a different sweetening power compared with common sugar are replaced, such as for example honey, treacle or other sweeteners of natural or synthetic origin; the same would apply if such sweetening substances were replaced with common sugar.

The confectionery products prepared at temperatures from 45°C to 180°C mentioned below include semi-finished products and/or products ready for consumption comprising all the steps of their preparation: weighing or dosing, mixing and further processing, rising if needed, before-cooking finishing, cooking, after-cooking finishing and packaging.

Non-limiting examples of confectionery products prepared at temperatures from 45°C to 180°C are: jams and preserves, fresh pastry creams, puddings, butter creams (recipes wherein butter can be replaced with other fats such as fully vegetable margarines, mixed margarines, cocoa butter or blends of other fats containing percentages of olive oil), spreads, chocolate pastries, chocolate, chocolate substitutes (the terms chocolate is to be construed in all its variations: white, milk, pure, hazelnut chocolate, etc.), creams for frozen desserts, confectionery and ice-cream semifinished products (ice-cream pastes such as zabaione, custard, fruit pastes for flavouring creams and ice-creams), sterilised semifinished products, cooker-prepared dessert doughs such as dried fruit brittle and the like, marzipan and the like, decoration modelling pastes, candies and the like, fruit jellies and the like, nougat, chewing gums, semifinished products to be whipped for filling or decoration (UHT vegetable cream), pasteurised egg-based semifinished products and the like, milk-based or cream-based semifinished products.

The confectionery products prepared at temperatures from 45°C to 180°C sweetenable or sweetened with the sweetener composition covered by the present invention comprise: the sweetener composition covered by the present invention, replacing sugar or sucrose, generally in combination with water, fat, flour/starch, whole eggs or separated eggs (egg yolk or egg white or egg yolk and egg white in percentages other than in the whole egg), milk, dried fruits such as almonds, nuts, hazelnuts, pistachios, peanuts, etc., fresh and/or frozen and/or dehydrated fruit, yeasts of a chemical or biological nature, gelling products of a protein nature such as isinglass and pectin, chewing gum, additives required in the countries of production and all the ingredients not being described present in the recipe.

### c) confectionery products and drinks prepared at temperatures from 0°C to 45°C:

The following descriptions are to be construed by way of non-limiting examples, since the applicability of the sweetener composition covered by the present invention consists of the replacement with an equal, identical and corresponding (with a one/one ratio) amount compared to the sugar normally used in all the confectionery products and drinks prepared at temperatures from 0°C to 45°C, whether they are classic recipes (known universally) or typical recipes (better known in the geographic areas of production).

The percentage of the sweetener composition covered by the present invention to replace sugar must be readjusted exclusively when sweetening substances having a different sweetening power compared with common sugar are replaced, such as for example honey, treacle or other sweeteners of natural or synthetic origin; the same would apply if such sweetening substances were replaced with common sugar.

The confectionery products and drinks prepared at temperatures from 0°C to 450°C mentioned below include semi-finished products and/or products ready for consumption comprising all the steps of their preparation: weighing or dosing, mixing and further processing, rising if needed, before-cooking finishing, cooking, after-cooking finishing and packaging.

Non-limiting examples of confectionery products and drinks prepared at temperatures from 0°C to 45°C are: Non-alcoholic carbonated beverages such as cola, carbonated beverages with fruit flavouring (orange, lemon, grapefruit, etc.), tonic water, non-alcoholic sparkling wine and the like; alcoholic carbonated beverages such as beer, flavoured beer, fizzy beverages based on concentrated must; non-alcoholic beverages such as fruit juices, drinks containing tea, coffee, cocoa, egg, natural or artificial flower flavours, mixed fruits and/or vegetables; sports drinks, energy drinks; yoghurt, drinkable yoghurt, drinks containing lactic ferments, drinks containing probiotics; alcoholic beverages based on concentrated must, hydroalcoholic solutions used for the preparation of spirits, alcoholic creams (rum, lemon, myrtle, orange), confectionery liqueurs; powder, liquid, gel semifinished blends for manufacturing bakery products, creams, puddings, desserts and ice-creams, for both professional and household use; pre-processed products ready for baking (puff pastry and shortcrust pastry rolls), pre-proofed products ready for baking (croissants, Berliner doughnuts). The confectionery products and drinks prepared at temperatures from 0°C to 45°C sweetenable or sweetened with the sweetener composition covered by the present invention comprise: the sweetener composition covered by the present invention, replacing sugar or sucrose, generally in combination with water, fat, flour/starch, whole eggs or separated eggs (egg yolk or egg white or egg yolk and egg white in percentages other than in the whole egg), milk, dried fruits such as almonds, nuts, hazelnuts, pistachios, peanuts, etc., fresh and/or frozen and/or dehydrated fruit, yeasts of a chemical or biological nature, gelling products of a protein nature such as isinglass and pectin, alcohol, natural flavours, tea, coffee, cocoa, additives required in the countries of production and all the ingredients not being described present in the recipe.

### d) confectionery products prepared at temperatures of 0°C or less:

The following descriptions are to be construed by way of non-limiting examples, since the applicability of the sweetener composition covered by the present invention consists of the replacement with an equal, identical and corresponding (with a one/one ratio) amount compared to the sugar normally used in all the confectionery products prepared at temperatures of 0°C or less, whether they are classic recipes (known universally) or typical recipes (better known in the geographic areas of production). The percentage of the sweetener composition covered by the present invention to replace sugar must be readjusted exclusively when sweetening substances having a different sweetening power compared with common sugar are replaced, such as for example honey, treacle or other sweeteners of natural or synthetic origin; the same would apply if such sweetening substances were replaced with common sugar. The confectionery products prepared at temperatures of 0°C or less mentioned below include semi-finished products and/or products ready for consumption comprising all the steps of their preparation: weighing or dosing, mixing and further processing, and packaging.

Non-limiting examples of confectionery products prepared at temperatures of 0°C or less are: milk-based ice-creams, water-based ice-creams; frozen desserts; mousses and the like; pre-processed products such as cannoli, puff pastries, etc., and pre-proofed products such as croissants and Berliner doughnuts; sorbets; semifinished products for finishing, filling and flavouring confectionery and ice-cream products.

The confectionery products prepared at temperatures of 0°C or less sweetenable or sweetened with the sweetener composition covered by the present invention comprise: the sweetener composition covered by the present invention, replacing sugar or sucrose, generally in combination with water, fat, flour/starch, whole eggs or separated eggs (egg yolk or egg white or egg yolk and egg white in percentages other than in the whole egg), milk, dried fruits such as almonds, nuts, hazelnuts, pistachios, peanuts, etc., fresh and/or frozen and/or dehydrated fruit, yeasts of a chemical or biological nature, gelling products of a protein nature such as isinglass and pectin, alcohol, natural flavours, tea, coffee, cocoa, additives required in the countries of production and all the ingredients not being described present in the recipe. In developing and implementing the sweetener composition covered by the present invention, the applicant adopted a general method suitable for the preparation of sweetener compositions replacing sucrose which, the weight being equal to that of the replaced sucrose, although featuring the same sweetening power in a 1/1 ratio, have a definitely lower calorie intake and a strongly reduced glycemic and insulinemic impact compared to the amount of the replaced sucrose or sugar.

### EXAMPLES

### PREPARATION OF SWEETENER COMPOSITIONS

### Sweetener compositions according to the invention:

In accordance with the method for the preparation of sweetener compositions covered by the present invention, as detailed in the general description, several compositions were prepared, each weighing 10 kg, mixing with one another the three basic components Maltitol, Xylitol and Rebaudioside A, the latter having a purity of 97%, in various ratio ranges expressed in parts per million ppm, as follows:

**Mixture type 1:**

| Component | ppm |
|---|---|
| Rebaudioside A | 590 - 690 |
| Xylitol | 39,310 - 170,000 |
| Maltitol | 829,410 - 960,000 |

**Mixture type 2:**

| Component | ppm |
|---|---|
| Rebaudioside A | 310 - 590 |
| Xylitol- | 170,000 - 650,000 |
| Maltitol | 349,690 - 829,410 |

with the aim to achieve the same sweetening power as the same amount of 10 Kg of sucrose.

### Sweetener compositions not according to the invention

Using the basic components Maltitol, Xylitol and Rebaudioside A and reproducing the method for the preparation of the composition according to the invention, several compositions were prepared, each weighing 10 Kg, wherein the three components were combined with one another in ratio ranges, expressed in parts per million ppm, not according to the invention, as follows:

**Mixture type 3**

| Component | ppm |
|---|---|
| Rebaudioside A | < 310 |
| Xylitol | > 650,000 |
| Maltitol | < 349,000 |

with the aim to achieve the same sweetening power as the same amount of 10 Kg of sucrose.

Specifically, the sweetener composition not according to the invention, mixture type 3, has the following formulation:

**Mixture type 3**

| Component | ppm |
|---|---|
| Rebaudioside A | 304 |
| Xylitol | 958,853.35 |
| Maltitol | 40,842.65 |

wherein the amounts of the three components are each outside the ranges of the composition according to the present invention, a mixture type 3 prepared in order to achieve the same sweetening power as the same amount of 10Kg of sucrose.

### PREPARATION OF SWEETENED FOOD PRODUCTS

Four different kinds of confectionery products were prepared: a sponge cake (designated by the letter B or P in the "triangle" tests) as bakery product, a pastry cream (designated by the letter D or C in the "triangle" tests) as product processed at a temperature of 90°C, a liquid confectionery product (designated by the letter E) prepared at room temperature, and an ice-cream (designated by the letter C or G in the "triangle" tests).

Each of the four kinds of food products described above has been prepared in four formulations, in sufficient amounts to be then submitted to two kinds of sensory analysis: "triangle" test and "sensory profile" test; all the other components and conditions of preparation being equal, the first (designated by number 1, for example E1) has been sweetened with a certain established amount of sugar, the second (designated by number 2, for example E2) has been sweetened with an equivalent amount of one of the **mixture types 1 (according to the invention),** the third (designated by number 3, for example E3) has been sweetened with an equivalent amount of sugar of one of the **mixture types 2 (according to the invention),** the fourth (designated by number 4, for example E4) has been sweetened with an equivalent amount of sugar of one of the mixture types 3 (not according to the invention).

In particular, for sponge cake products:
**Sponge cake B1/P1- B2/P2- B3- B4**

### B1/P1 sweetened with sugar

### Recipe:

**gr 2,300 (about 34) eggs**

| | |
|---|---|
| gr 975 | sugar |
| gr 750 | corn flour/starch |

### Process:

The egg yolk was divided from the egg white, then on one side the egg yolks were whipped with 375 gr of sugar to which flour was added, on the other side the egg whites were whipped with 600 gr of sugar and the two compounds were mixed. The obtained dough was poured in the appropriate baking trays and baked at a temperature of 220°C for 20 minutes.

### B2/P2 sweetened with mixture type 1

### Recipe:

**gr 2,300 (about 34) eggs**

| | |
|---|---|
| gr 975 | mixture type 1 |
| gr 750 | corn flour/starch |

### Process:

The egg yolk was divided from the egg white, then on one side the egg yolks were whipped with 375 gr of mixture type 1 to which flour was added, on the other side the egg whites were whipped with 600 gr of mixture type 1 and the two compounds were mixed. The obtained dough was poured in the appropriate baking trays and baked at a temperature of 220°C for 20 minutes.

### B3 sweetened with mixture type 2

### Recipe:

**gr 2,300 (about 34) eggs**

| | |
|---|---|
| gr 975 | mixture type 2 |
| gr 750 | corn flour/starch |

### Process:

The egg yolk was divided from the egg white, then on one side the egg yolks were whipped with 375 gr of mixture type 2 to which flour was added, on the other side the egg whites were whipped with 600 gr of mixture type 2 and the two compounds were mixed. The obtained dough was poured in the appropriate baking trays and baked at a temperature of 220°C for 20 minutes.

### B4 sweetened with mixture type 3

### Recipe:

**gr 2,300 (about 34) eggs**

| | |
|---|---|
| gr 975 | mixture type 3 |
| gr 750 | corn flour/starch |

### Process:

The egg yolk was divided from the egg white, then on one side the egg yolks were whipped with 375 gr of mixture type 3 to which flour was added, on the other side the egg whites were whipped with 600 gr of mixture type 3 and the two compounds were mixed. The obtained dough was poured in the appropriate baking trays and baked at a temperature of 220°C for 20 minutes.

In particular, for pastry cream products:
**Pastry cream D1/C1- D2/C2- D3- D4**

### D1/C1 sweetened with sugar

### Recipe:

**gr 1,000 milk**

| | |
|---|---|
| gr 300 | sugar |
| gr 100 | pasteurized egg yolk |
| gr 60 | corn flour/starch |

### Process:

The sugar and the egg yolk were mixed and the flour was afterwards added. The milk was brought to a temperature of 85°C, the previously prepared compound was added and the whole baked at 90°C, then placed in a receptacle which has brought its thickness to 2 cm, cooled down and served at 4°C.

### D2/C2 sweetened with mixture type 1

### Recipe:

**gr 1,000 milk**

| | |
|---|---|
| gr 300 | mixture type 1 |
| gr 100 | pasteurized egg yolk |
| gr 60 | corn flour/starch |

### Process:

The mixture type 1 and the egg yolk were mixed and the flour was afterwards added. The milk was brought to a temperature of 85°C, the previously prepared compound was added and the whole baked at 90°C, then placed in a receptacle which has brought its thickness to 2 cm, cooled down and served at 4°C.

### D3 sweetened with mixture type 2

### Recipe:

**gr 1,000 milk**

| | |
|---|---|
| gr 300 | mixture type 2 |
| gr 100 | pasteurized egg yolk |
| gr 60 | corn flour/starch |

### Process:

The mixture type 2 and the egg yolk were mixed and the flour was afterwards added. The milk was brought to a temperature of 85°C, the previously prepared compound was added and the whole baked at 90°C, then placed in a receptacle which has brought its thickness to 2 cm, cooled down and served at 4°C.

### D4 sweetened with mixture type 3

### Recipe:

**gr 1,000 milk**

| | |
|---|---|
| gr 300 | mixture type 3 |
| gr 100 | pasteurized egg yolk |
| gr 60 | corn flour/starch |

### Process:

The mixture type 3 and the egg yolk were mixed and the flour was afterwards added. The milk was brought to a temperature of 85°C, the previously prepared compound was added and the whole baked at 90°C, then placed in a receptacle which has brought its thickness to 2 cm, cooled down and served at 4°C.

In particular, for confectionery dipping sauce products (syrup):
**Confectionery dipping sauce E1- E2- E3- E4**

### E1 sweetened with sugar

### Recipe:

**gr 1,780 water**

| | |
|---|---|
| gr 500 | sugar |
| gr 220 | maraschino confectionery dipping sauce (70° hydroalcoholic solution) |

### Process:

All ingredients were mixed at room temperature.

### E2 sweetened with mixture type 1

### Recipe:

**gr 1,780 water**

| | |
|---|---|
| gr 500 | mixture type 1 |
| gr 220 | maraschino confectionery dipping sauce (70° hydroalcoholic solution) |

### Process:

All ingredients were mixed at room temperature.

### E3 sweetened with mixture type 2

### Recipe:

**gr 1,780 water**

| | |
|---|---|
| gr 500 | mixture type 2 |
| gr 220 | maraschino confectionery dipping sauce (70° hydroalcoholic solution) |

### Process:

All ingredients were mixed at room temperature.

### E4 sweetened with mixture type 3

### Recipe:

**gr 1,780 water**

| | |
|---|---|
| gr 500 | mixture type 3 |
| gr 220 | maraschino confectionery dipping sauce (70° hydroalcoholic solution) |

### Process:

All ingredients were mixed at room temperature.

In particular, for ice-cream products:
**Ice-cream C1/G1- C2/G2- C3- C4**

### C1/G1 sweetened with sugar

### Recipe:

**gr 1,000 milk**

| | |
|---|---|
| gr 300 | sugar |
| gr 100 | cream |
| gr 6 | hot neutral ice-cream base |

### Process:

All the ingredients were mixed and the mixture was afterwards pasteurized and left to season for 24 hours at 2°C. When seasoned, the mixture was creamed and stored at -18°C for 2 hours, then served at 8/10°C.

### C2/G2 sweetened with mixture type 1

### Recipe:

**gr 1,000 milk**

| | |
|---|---|
| gr 300 | mixture type 1 |
| gr 100 | cream |
| gr 6 | hot neutral ice-cream base |

### Process:

All the ingredients were mixed and the mixture was afterwards pasteurized and left to season for 24 hours at 2°C. When seasoned, the mixture was creamed and stored at -18°C for 2 hours, then served at 8/10°C.

### C3 sweetened with mixture type 2

### Recipe:

**gr 1,000 milk**

| | |
|---|---|
| gr 300 | mixture type 2 |
| gr 100 | cream |
| gr 6 | hot neutral ice-cream base |

### Process:

All the ingredients were mixed and the mixture was afterwards pasteurized and left to season for 24 hours at 2°C. When seasoned, the mixture was creamed and stored at -18°C for 2 hours, then served at 8/10°C.

### C4 sweetened with mixture type 3

### Recipe:

**gr 1,000 milk**

| | |
|---|---|
| gr 300 | mixture type 3 |
| gr 100 | cream |
| gr 6 | hot neutral ice-cream base |

### Process:

All the ingredients were mixed and the mixture was afterwards pasteurized and left to season for 24 hours at 2°C. When seasoned, the mixture was creamed and stored at -18°C for 2 hours, then served at 8/10°C.

### SENSORY ANALYSIS

The sweetened food products described above were submitted to sensory analysis with the relevant "triangle" tests performed in the premises of C.N.R.-IBIMET in Bologna and with the "sensory profile" tests performed in the premises of Astra innovazione e sviluppo in Faenza.

### TRIANGLE TEST

The sweetened food products SPONGE CAKE: B1/P1, B2/P2; PASTRY CREAM: D1/C1, D2/C2; CONFECTIONERY DIPPING SAUCE: E1, E2; ICE-CREAM: C1/G1, C2/G2 were submitted to "triangle" test according to UNI 11073/2003 rules.

### "Determination of sensory difference between two products through the Triangle Test (UNI 11073/2003): Sponge Cake"

### Test report IBIMET-CNR

### Products submitted to the test

Two samples of sponge cake were submitted to testing: the first corresponding to B1, herein classified as P1, sweetened with sugar; the second corresponding to B2, herein classified as P2, sweetened with mixture type 1.

### Purposes of the method

The purpose of the test was to determine whether a difference between the two products P1 and P2 (in the reference rule generically designated as A and B) could be perceived as a result of the change of the ingredients having a sweetening function in the preparation of the sponge cake. The experimental plan envisaged that the product had to be submitted to the assessors according to a protocol which considered submitting to the assessors in randomized sequence the 6 possible sets of three samples (AAB, ABA, BAA, BBA, BAB, ABB).

### Planning and performance of the test

After preparation, the two products (P1 and P2) were stored at room temperature and evenly portioned (30 g, cm 4 x 4) immediately before the performance of the test. A set of three samples was submitted simultaneously to the assessors, the samples being identified exclusively by numbers consisting of three figures, the assessors were instructed to taste the samples in sequence starting from the leftmost up to the rightmost and, having tasted the three samples, specify which of the three was different. The assessors were informed that the choice was "mandatory" and that accordingly the answer "no difference" was not admitted. If no difference was perceived, the assessors were asked to select one of the three samples randomly and report in the commentary section that the choice was made based on supposition. The samples were tested at room temperature (22±2°C), in an individual booth (UNI ISO 8589) preventing the assessors from communicating with one another until the end of the assessments. The data was acquired in netbooks equipped with software FIZZ (Biosystemes, France) by means of a specific program for the acquisition and processing of data relating to triangle tests.

Depending on the test objectives and the product features, a number of 30 assessors experienced in performing triangle tests and familiar with confectionery products resembling those covered by the test was deemed appropriate.

### Results

The 30 assessors correctly accomplished the test, specifying which of the three samples tasted differently from the other 2.

The number of correct answers turned out to be 13 out of 30. Based on schedule 2 of UNI 11073/2003 norm, the minimum number of correct answers to conclude (α=0.05) that a perceivable difference exists is 15.

Accordingly, no significant difference between the two products covered by the test can be detected.

### "Determination of sensory difference between two products through the Triangle Test (UNI 11073/2003): pastry cream"

### Products submitted to the test

Two samples of pastry cream were submitted to testing: the first corresponding to D1, herein classified as C1, sweetened with sugar; the second corresponding to D2, herein classified as C2, sweetened with mixture type 1.

### Purposes of the method

The purpose of the test was to determine whether a difference between the two products C1 and C2 (in the reference rule generically designated as A and B) could be perceived as a result of the change of the ingredients having a sweetening function in the preparation of the pastry cream. The experimental plan envisaged that the product had to be submitted to the assessors according to a protocol which considered submitting to the assessors in randomized sequence the 6 possible sets of three samples (AAB, ABA, BAA, BBA, BAB, ABB).

### Planning and performance of the test

After preparation, the two products (C1 and C2) were stored in the fridge (4-5 °C), placed at room temperature and evenly portioned (25 gr in 80cc glasses for foodstuff use) immediately before the performance of the test. A set of three samples was submitted simultaneously to the assessors, the samples being identified exclusively by numbers consisting of three figures, the assessors were instructed to taste the samples in sequence starting from the leftmost up to the rightmost and, having tasted the three samples, specify which of the three was different. The assessors were informed that the choice was "mandatory" and that accordingly the answer "no difference" was not admitted.

If no difference was perceived, the assessors were asked to select one of the three samples randomly and report in the commentary section that the choice was made based on supposition. The samples were tested at room temperature (22±2°C), in an individual booth (UNI ISO 8589) preventing the assessors from communicating with one another until the end of the assessments. The data was acquired in netbooks equipped with software FIZZ (Biosystemes, France) by means of a specific program for the acquisition and processing of data relating to triangle tests.

Depending on the test objectives and the product features, a number of 30 assessors experienced in performing triangle tests and familiar with confectionery products resembling those covered by the test was deemed appropriate.

### Results

The 30 assessors correctly accomplished the test, specifying which of the three samples tasted differently from the other 2.

The number of correct answers turned out to be 9 out of 30. Based on schedule 2 of UNI 11073/2003 norm, the minimum number of correct answers to conclude (α=0.05) that a perceivable difference exists is 15.

Accordingly, no significant difference between the two products covered by the test can be detected.

### "Determination of sensory difference between two products through the Triangle Test (UNI 11073/2003): syrup (confectionery dipping sauce)"

### Products submitted to the test

Two samples of syrup with maraschino flavouring (confectionery dipping sauce) were submitted to testing: the first corresponding to E1, sweetened with sugar; the second corresponding to E2, sweetened with mixture type 1.

### Purposes of the method

The purpose of the test was to determine whether a difference between the two products E1 and E2 (in the reference rule generically designated as A and B) could be perceived as a result of the change of the ingredients having a sweetening function in the preparation of syrups. The experimental plan envisaged that the product had to be submitted to the assessors according to a protocol which considered submitting to the assessors in randomized sequence the 6 possible sets of three samples (AAB, ABA, BAA, BBA, BAB, ABB).

### Planning and performance of the test

After preparation, the two products (E1 and E2) were stored in the fridge (5 °C), placed at room temperature just before tasting and evenly portioned (25 gr in 80cc glasses for foodstuff use). A set of three samples was submitted simultaneously to the assessors, the samples being identified exclusively by numbers consisting of three figures, the assessors were instructed to taste the samples in sequence starting from the leftmost up to the rightmost and, having tasted the three samples, specify which of the three was different. The assessors were informed that the choice was "mandatory" and that accordingly the answer "no difference" was not admitted. If no difference was perceived, the assessors were asked to select one of the three samples randomly and report in the commentary section that the choice was made based on supposition. The samples were tested at room temperature (22±2°C), in an individual booth (UNI ISO 8589) preventing the assessors from communicating with one another until the end of the assessments. The data was acquired in netbooks equipped with software FIZZ (Biosystemes, France) by means of a specific program for the acquisition and processing of data relating to triangle tests.

Depending on the test objectives and the product features, a number of 30 assessors experienced in performing triangle tests and familiar with confectionery products resembling those covered by the test was deemed appropriate.

### Results

The 32 assessors correctly accomplished the test, specifying which of the three samples tasted differently from the other 2.

The number of correct answers turned out to be 13 out of 32. Based on schedule 2 of UNI 11073/2003 norm, the minimum number of correct answers to conclude (α=0.05) that a perceivable difference exists is 16.

Accordingly, no significant difference between the two products covered by the test can be detected.

### "Determination of sensory difference between two products through the Triangle Test (UNI 11073/2003): ice-cream"

### Products submitted to the test

Two samples of ice-cream were submitted to testing: the first corresponding to C1, herein classified as G1, sweetened with sugar; the second corresponding to C2, herein classified as G2, sweetened with mixture type 1.

### Purposes of the method

The purpose of the test was to determine whether a difference between the two products G1 and G2 (in the reference rule generically designated as A and B) could be perceived as a result of the change of the ingredients having a sweetening function in the preparation of ice-cream. The experimental plan envisaged that the product had to be submitted to the assessors according to a protocol which considered submitting to the assessors in randomized sequence the 6 possible sets of three samples (AAB, ABA, BAA, BBA, BAB, ABB).

### Planning and performance of the test

After preparation, the two products (G1 and G2) were stored in the freezer (-18 °C), kept in a refrigerated box to ensure even consistency and a temperature during tasting of about -8 °C, and evenly portioned (25 gr in 80cc glasses for foodstuff use). A set of three samples was submitted simultaneously to the assessors, the samples being identified exclusively by numbers consisting of three figures, the assessors were instructed to taste the samples in sequence starting from the leftmost up to the rightmost and, having tasted the three samples, specify which of the three was different. The assessors were informed that the choice was "mandatory" and that accordingly the answer "no difference" was not admitted. If no difference was perceived, the assessors were asked to select one of the three samples randomly and report in the commentary section that the choice was made based on supposition. The samples were tested at room temperature (22±2°C), in an individual booth (UNI ISO 8589) preventing the assessors from communicating with one another until the end of the assessments. The data was acquired in netbooks equipped with software FIZZ (Biosystemes, France) by means of a specific program for the acquisition and processing of data relating to triangle tests.

Depending on the test objectives and the product features, a number of 30 assessors experienced in performing triangle tests and familiar with confectionery products resembling those covered by the test was deemed appropriate.

### Results

The 30 assessors correctly accomplished the test, specifying which of the three samples tasted differently from the other 2.

The number of correct answers turned out to be 12 out of 30. Based on schedule 2 of UNI 11073/2003 norm, the minimum number of correct answers to conclude (α=0.05) that a perceivable difference exists is 15.

Accordingly, no significant difference between the two products covered by the test can be detected.

### Conclusions

The triangle tests described above manifestly show the impossibility to distinguish the confectionery food products sweetened with sugar and, all the other ingredients and conditions of preparation being equal, the same products sweetened with the same amount of sweetener composition according to the present invention, regardless of the temperature of manufacturing, processing and following storage of the products submitted to analysis.

### SENSORY PROFILE TEST

The sweetened food products SPONGE CAKE: B1, B2, B3 and B4; PASTRY CREAM: D1, D2, D3 and D4; CONFECTIONERY DIPPING SAUCE: E1, E2, E3 and E4; ICE-CREAM: C1,C2, C3 and C4 were submitted to "sensory profile" test as described hereinafter, in order to:
1) Characterize the food products according to the main specific descriptors thereof.
2) Highlight any possible difference between the 4 samples for each type of product.

### Materials and methods

### Sensory analysis

The organoleptic assessments were performed by a panel of 18 assessors consisting of oenologists, agronomists and wine waiters, trained with the customary programs for the preparation of tasting groups and having worked for over 15 years at Astra's sensory laboratory.
**UNI EN ISO 8586-1** - Sensory analysis - General guidance for the selection, training and monitoring of assessors - Part 1: Selected assessors
**UNI EN ISO 8586-2** - Sensory analysis - General guidance for the selection, training and monitoring of assessors - Parte 2: Expert sensory assessors
**ISO 8587** - Sensory analysis - Methodology - Ranking 4 sessions of sensory analysis were required to perform all the tests envisaged in the study.

### Treatment of the sample for sensory analysis

All the samples to be submitted to sensory analysis were prepared in the kitchen facing the sensory laboratory.

Each type of sample was identified with a number code consisting of three figures and registered in the appropriate service forms.

The products were served in receptacles suitable for the service: white plastic saucers for the sponge cake, white plastic small glasses for pastry cream and syrups, white cups for ice-cream.

The pastry cream was served at about 8-10°C, the ice-cream was served at about -15°C, the syrup and the sponge cake were served at room temperature.

The samples were submitted to the assessors on trays containing the 4 samples being compared, but with a different order for each assessor as established by the working plan.

### Method of performance of the sensory analysis

The assessors were welcomed in the sensory analysis laboratory furnished with 6 individual booths compliant with the norm ISO 8589, provided with white lighting, sink, mineral water and unsalted crackers.

In each booth the following paper material was available:
1) instructions concerning the methods of performance of the tasting;
2) a form containing all the definitions of the descriptive parameters in assessing the specific type of product;
3) cards for descriptive and hedonistic sensory analysis;
4) card for performing the sorting test.

The number of samples concerned by the test were delivered to the assessor in the order previously established by the working plan.

### Used sensory tests

Several tests were used for organoleptic assessments, depending on the objectives to be achieved, as explained below.

The quantitative descriptive analysis (QDA) involves the quantitative assessment of the particular parameters describing the type of product. To this end, cards with scores from 1 to 9 increasing at constant intervals are used.

The hedonistic analysis assesses the pleasantness of the product using a card with scores from 1 to 9 increasing at constant intervals (a score above 5 is sufficient). The hedonistic assessment was divided into visual, olfactory, taste, structural pleasantness and overall assessment.

The score values of the various sensory assessment parameters which were considered were reproduced for all the tasted products in the "spider" charts herewith enclosed.

### Sorting test (ISO 8587)

In this test, the assessor must mandatorily sort by intensity (from the highest to the lowest) the requested parameter to be assessed. In particular, the samples were to be sorted by sweetness perception (from the sweetest to the least sweet) and by pleasantness (from the most pleasant to the least pleasant).

The data of this test was read by comparing the ranks (frequency of a sample by position multiplied by a "weight" by position). The rank sum is assessed within the non-significance range defined by Kramer's tables depending on the number of submitted samples (4 in our case) and on the number of assessors.

If the ranks are comprised within the non-significance range, it means that the samples are not significantly different. If the ranks are outside the non-significance range, it means that the samples are statistically different.

### RESULTS

### SPONGE CAKE

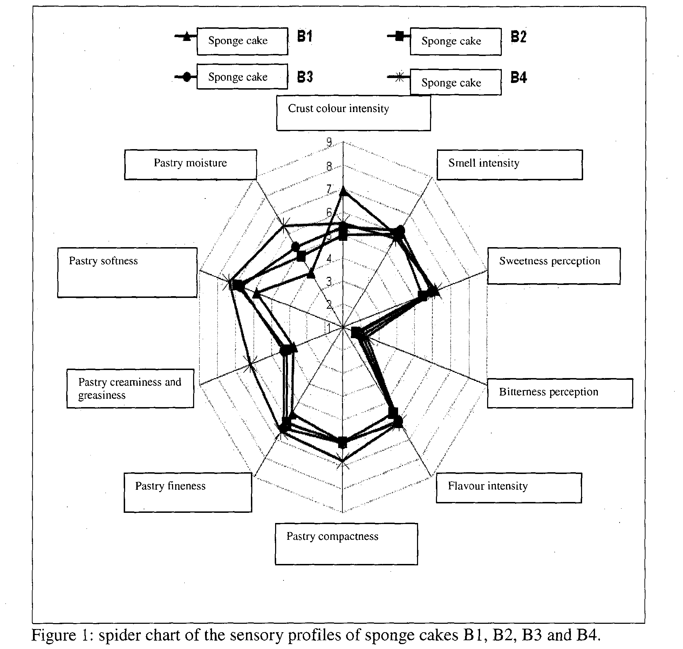

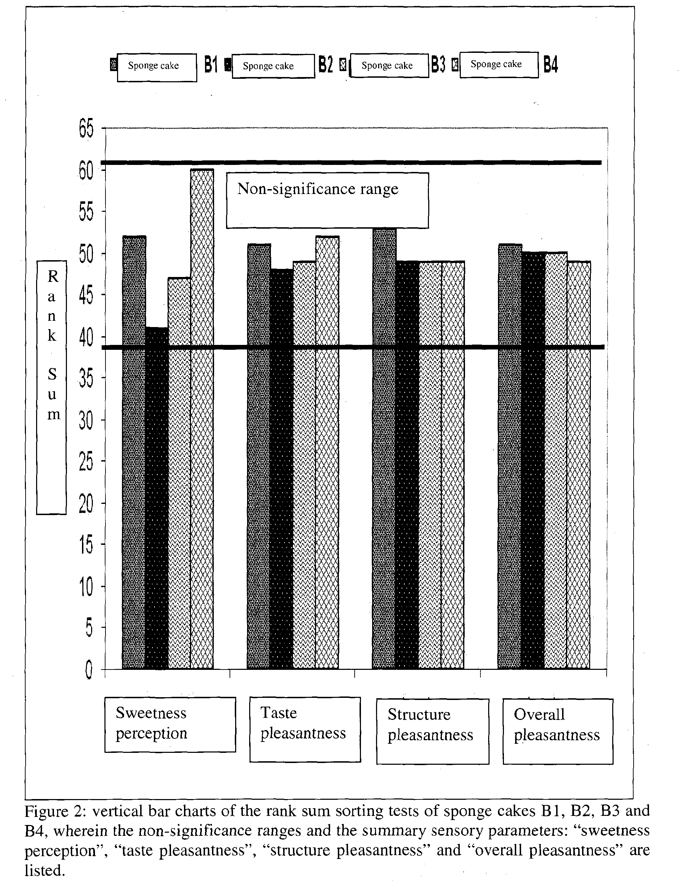

For practical reasons, the results of the sensory profile of the sponge cake products B1, B2, B3 and B4 were summarized in the spider chart of sensory profiles of figure 1 and in the vertical bar charts of the rank sum sorting test of figure 2, based on the data provided by each assessor, and are commented upon hereinafter.

No difference in taste, but some slight differences in structure emerged between samples B1 and B2. Sample B2 has a slightly finer structure, a slightly greasier and moister perception, softer than B1. B1 and B2 are both likewise appreciated in all aspects. No difference in taste, but some slight difference in structure emerged between B1 and B3. Sample B3 has a slightly finer structure, a slightly greasier and moister perception, softer than B1. B1 and B3 are both likewise appreciated in all aspects. The profiles of B1 and B4 are far different in their structural part: sample B1 has a slightly more crumbly, less compact structure, a coarser texture, less greasy, drier and less soft perception. The structure of sample B4 is conversely quite the opposite compared to B1: finer, ore compact, more greasy/buttery, moister dough. B1 and B4 do not show significant differences in hedonistic assessments.

Sample B1 has a crust with a slightly more intense, goldish colour, whereas the other 3 samples are about the same shade, only slightly lighter.

No significant difference from the olfactory standpoint emerged between B1, B2 and B3 (slightly stronger scent of egg in sample B3). Sweetness perception is slightly lower in sample B2 and higher in sample B4. However, differences are not significant.

The perception of bitterness is very low in all the samples, particularly in B2.

Flavour intensity is slightly lower in B2 than in the other samples, but not significantly. The taste-olfactory parts of the various samples are not significantly different from one another, whereas the structural part highlights deeper differences.

Samples B2 and B3 have a very similar structure, more comparable to B1.

Hedonistic appreciation judgments turned out to be very similar but without statistically significant differences between the 4 samples. This means that, although some differences were found, particularly in the structural part, these differences were at any rate likewise appreciated.

B3 turned out to be the basically least appreciated sample from the olfactory standpoint, on account of a higher perception of egg smell. The sample with the basically most appreciated structure was B1.

In the sorting test no significant differences between the 4 samples emerged as regards sweetness perception, taste pleasantness, structural pleasantness and the overall assessment. Basically (but not in a statistically significant manner) sample B4 was perceived as sweeter and sample B2 was perceived as the least sweet B2.

### PASTRY CREAM

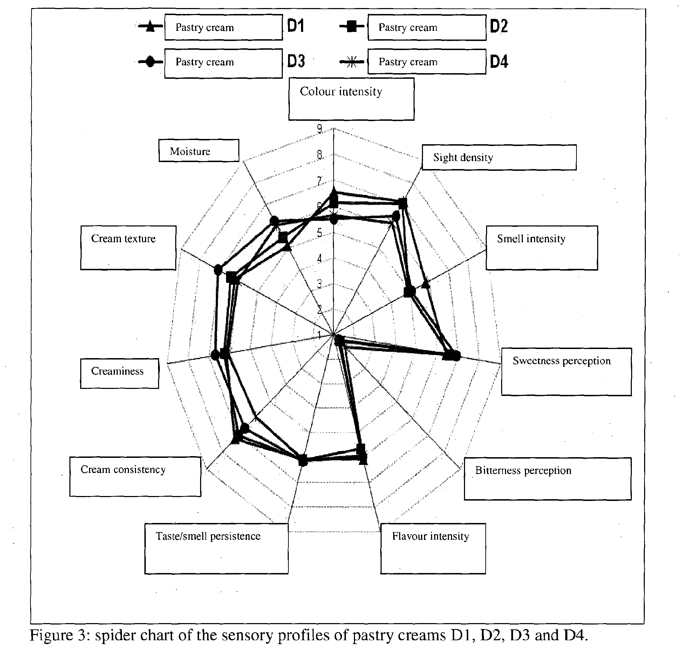

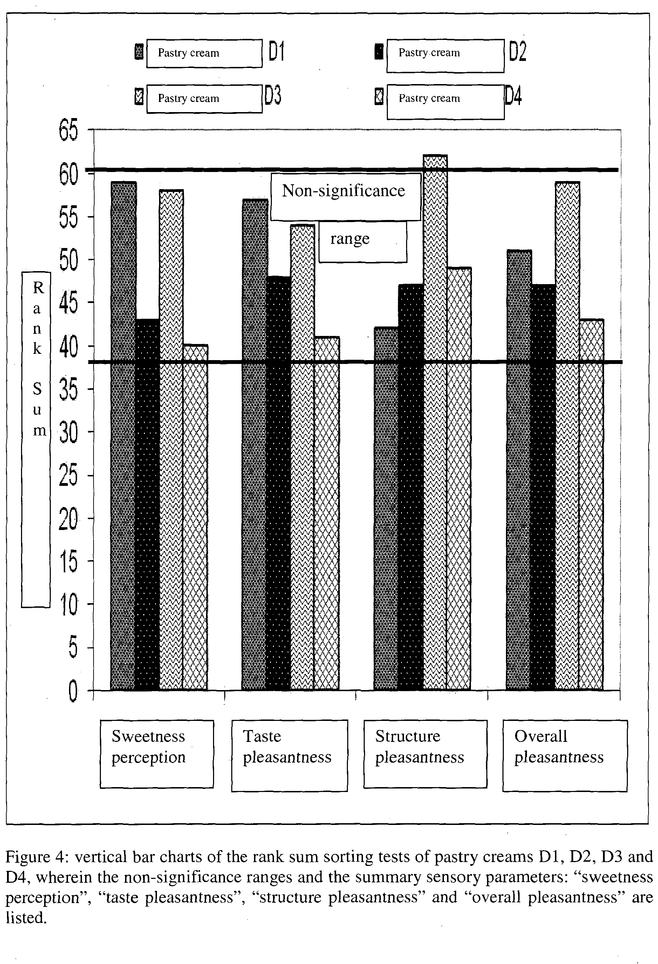

For practical reasons, the results of the sensory profile of the pastry cream products D1, D2, D3 and D4 were summarized in the spider chart of sensory profiles of figure 3 and in the vertical bar charts of the rank sum sorting test of figure 4, based on the data provided by each assessor, and are commented upon hereinafter.

Sample D2 has a slightly lower olfactory and flavour intensity than D1 and the same structural features. As a whole, D2 is slightly less appreciated than D1, particularly from the olfactory standpoint. Compared to D1, sample D3 is a paler yellow and has a lower density to both the sight and the touch, a weaker scent, a higher creaminess, a finer, moister texture. As a whole, D3 is slightly less appreciated than D1 from the olfactory standpoint but is more well-liked structurally. Compared to D1, sample D4 is a paler yellow, has a lower density to both the sight and the touch, a weaker scent, a texture with granules, a higher moisture. As a whole, D4 is slightly less appreciated than D1 in all aspects.

Compared to D2, sample D3 is a paler yellow and has a lower density to both the sight and the touch, a higher creaminess, a finer, moister texture. As a whole, D3 is slightly more appreciated than D2, particularly for its structure.

Compared to D3, sample D4 has-differences only in the structural aspect: slightly higher density to the touch, higher creaminess, texture with granules, higher moisture. As a whole, D4 is slightly less appreciated than D3 in all aspects.

From the olfactory standpoint, the highest appreciation was given to sample D1 and was similar for the other three samples. From the visual, taste and structural standpoints, samples D1 and D3 turned out to be the most appreciated.

In the sorting test, no statistically significant differences in sweetness perception emerged between the 4 samples. Basically samples D1 and D3 were perceived as sweeter than D2 and D4. No statistically significant differences emerged in taste pleasantness. Basically samples D1 and D3 were more appreciated to the taste than D2 and D4. The structure of sample D3 turned out to be statistically more appreciated than other samples (finer structure and creamier perception). In overall assessments no statistically significant differences emerged. Basically D3 turned out to be the most appreciated sample and D4 turned out to be the least appreciated sample.

### SYRUP (CONFECTIONERY DIPPING SAUCE)

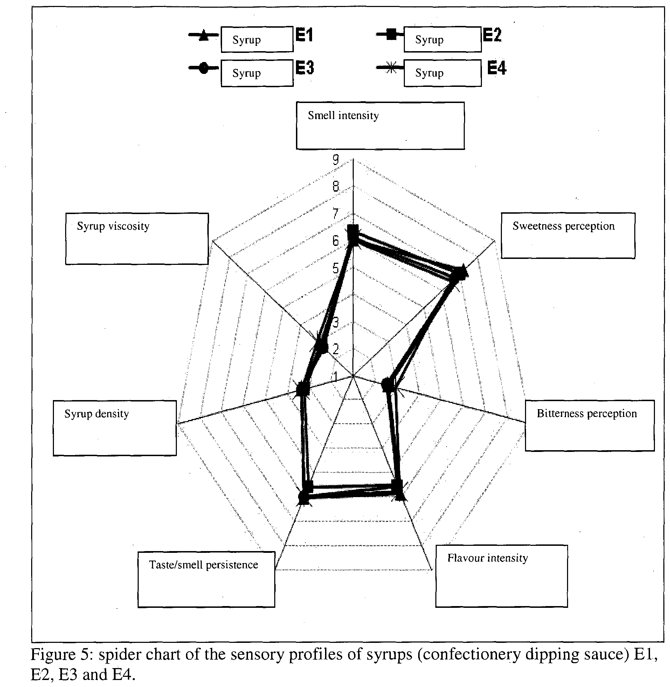

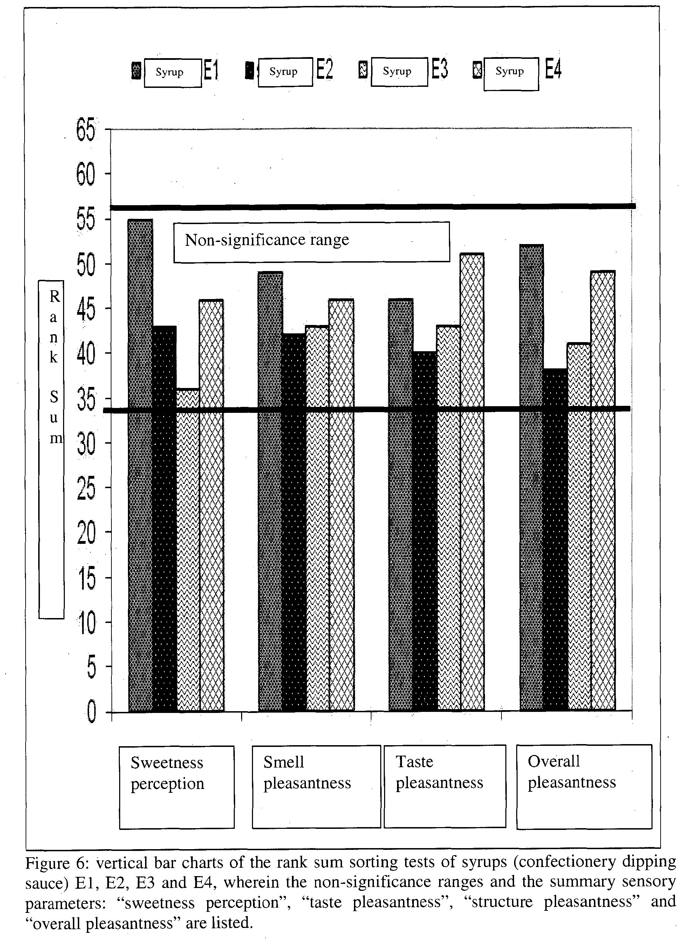

For practical reasons, the results of the sensory profile of the syrup products E1, E2, E3 and E4 were summarized in the spider chart of sensory profiles of figure 5 and in the vertical bar charts of the rank sum sorting test of figure 6, based on the data provided by each assessor, and are commented upon hereinafter.

Syrup E1 turned out to be the one with the most delicate scent. The smell comprises almond, aniseed, mint, some sweet flower (acacia), the almond scent standing out more, the aniseed scent being less perceivable. As flavours, alcohol, almond and aniseed are perceivable. From the standpoint of taste, it turned out to be the least persistent, the most delicate, slightly sweeter than the other samples. Unlike the others, sample E1 is slightly yellowish. Syrup E2 has a sweet smell of acacia and rose, aniseed, almond, appearing to have the strongest scent of almond and aniseed.

The flavours of aniseed and almond are perceivable, the taste is scarcely persistent. Syrup E3 has a slight smell of acacia and alcohol, the touch of aniseed prevails on almond. It is fairly persistent. Syrup E4 has shown a smell of almond, aniseed, mint, with a less intense scent, a flavour of bitter almond, mint, has a slightly more bitterish, more penetrating, more marked, highly persistent taste.

In all samples, the sensory profiles are very similar and no significant differences are highlighted.

In the assessments of pleasantness as well, no significant differences emerged.

In the sorting test, no significant differences emerged between the syrups with regard to any parameter. Syrup E1 turned out to be basically sweeter than the other 3 samples. Syrup E3 turned out to be basically less sweet than the other three samples. In the overall assessment, syrup E1 turned out to be basically more appreciated and syrup E2 turned out to be basically less appreciated.

### ICE-CREAM

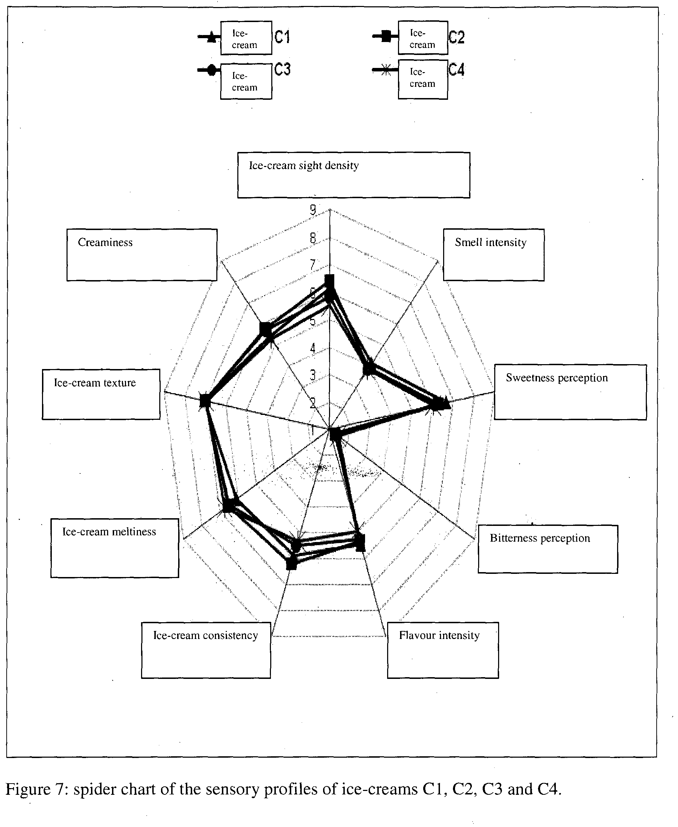

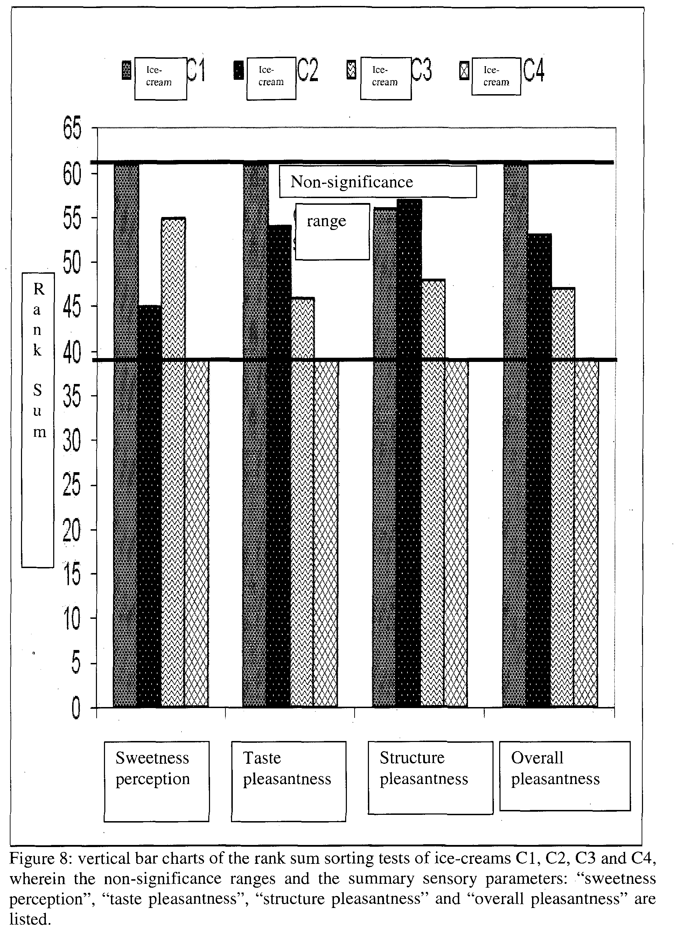

For practical reasons, the results of the sensory profile of the ice-cream products C1, C2, C3 and C4 were summarized in the spider chart of sensory profiles of figure 7 and in the vertical bar charts of the rank sum sorting test of figure 8, based on the data provided by each assessor, and are commented upon hereinafter.

Ice-cream C2 has a sensory profile which is practically identical to ice-cream C1. Ice-cream C2 has pleasantness assessments strongly resembling ice-cream C1. Compared to C1, ice-cream C3 is slightly less dense to the sight and to the touch, less scented, less sweet, less flavoury, and melts more rapidly. In all pleasantness assessments, ice-cream C3 is less appreciated than ice-cream C1. Compared to C1, ice-cream C4 is less dense to the sight and to the touch, less scented, less sweet, less flavoury, and melts more rapidly. In all pleasantness assessments, ice-cream C4 is less appreciated than ice-cream C1. Compared to C2, ice-cream C3 is slightly less dense to the sight and to the touch, and slightly less sweet. Except for olfactory assessment, in the other pleasantness assessments ice-cream C3 is less appreciated than ice-cream C2. Compared to C2, ice-cream C4 is definitely less dense to the sight and to the touch, less flavoury and less buttery. In all pleasantness assessments ice-cream C4 is less appreciated than ice-cream C2. Compared to C3, ice-cream C4 is slightly less dense to the sight and to the touch, less flavoury and less buttery. Except for structure, in all the other aspects of pleasantness ice-cream C4 is less appreciated than ice-cream C3.

In the sorting test ice-cream C1 turned out to be basically the sweetest and ice-cream C4 has turned out to be basically the least sweet. Ice-cream C2 and C3 are not significantly different in sweetness perception. Ice-cream C1 turned out to be basically the most appreciated to the taste, whereas C4 turned out to be basically the least appreciated. Ice-creams C2 and C3 are not significantly different. Ice-cream C4 has a basically less appreciated structure than the others (too soft). Ice-cream C1 turned out to be basically the most appreciated, whereas C4 turned out to be basically the least appreciated. Ice-creams C2 and C3 are not significantly different.

### CONCLUSIONS

In all the 4 different formulations (sponge cake, pastry cake, syrup, ice-cream), in the sorting test no significant differences emerged about sweetness perception, taste pleasantness and overall pleasantness.

Basically a lower appreciation is to be remarked with regard to formulations identified with number 4 (products sweetened with mixture type 3), for example the ice-cream tends to melt more rapidly and the pastry cream is a slightly lighter colour and features more granules.

The differences found between formulations in structure and colour, particularly in the sponge cake and in the pastry cream, are probably ascribable also to processing/cooking.

Except for all the formulations identified with number 4 (products sweetened with mixture type 3), all the products sweetened with sweetener compositions according to the present invention (products sweetened with mixture types 1 or 2) were deemed as very similar to or indistinguishable from those sweetened with sugar or as having such variations as not to be regarded as significantly less appreciable in terms of taste, scent and overall assessment thereof, regardless of the temperatures of manufacturing, processing and storage.

Conversely, all the formulations identified with number 4 (products sweetened with mixture type 3, not according to the invention) have shown already in the processing step some differences of behaviour compared to the same processing steps of products sweetened with sugar or with the compositions covered by the present invention (which are by contrast comparable to each other).

Further and more marked differences between the formulations identified with number 4 and all the others were retrieved during the performance of sensory tests. An instability was found which is strongly dependent on temperature for formulations identified with number 4:
- In the sponge cake, sweetness perception is higher than in the other formulations and the overall pleasantness is lower than that of the other formulations;
- In the pastry cream, sweetness perception is lower than in the other formulations and the overall pleasantness is lower than that of the other formulations;
- In the syrup, sweetness perception is halfway between that of the other formulations and the overall pleasantness is halfway between that of the other formulations;
- In the ice-cream, sweetness perception is definitely lower than in the other formulations and the overall pleasantness is lower than that of the other formulations;

It must necessarily be concluded that products sweetened with mixture type 3, namely sweetener compositions not according to the invention and identified with number 4, have an unsteady overall sensory profile, which means strongly influenced by temperatures and the steps of preparation, processing and storage of the same.

This is confirmed by the circumstance that the only product, syrup (confectionery dipping sauce), which is sweetened with a composition not according to the invention (mixture type 3) and which has a stable overall sensory profile is a product achieved through a processing at room temperature and an extremely simple preparation step, only consisting of the mere mixing of the product ingredients.

In contrast with what is specified in the state of the art, wherein the safe combination of Rebaudioside A with sweeteners such as Erythritol, characterized by a low calorie intake, is preferential, the sweetener composition covered by the present invention combines, in predetermined weight ratios between one another, Rebaudioside A, Xylitol and Maltitol, in particular even if the latter has a calorie intake which is ten times that of Erythritol, the sweetening power being substantially the same, because it is the specific three-component mixture covered by the present invention which, integrally replacing an identical amount of sugar or sucrose, allows products which are either edible or ingestible to be sweetened regardless of the temperature at which said products are prepared, processed, stored, taken or consumed.

The experimental data described above confirms that the sweetener composition covered by the present invention, the weight being equal to that of the replaced sucrose, does not alter the organoleptic properties of the products which are sweetened with said composition, the same being indistinguishable from the same amount of the replaced sucrose, regardless of the temperature of processing of the products sweetened with the composition covered by the present invention.

The comparative tests confirm that, in order to replace an identical amount of sucrose, it is not sufficient for replacement sweeteners to have a resulting sweetening power equalling that of the amount of the replaced sucrose.

The technical effect of the three-component composition covered by the present invention, in consideration of the specific weight ratios wherein the essential components Rebaudioside A, Maltitol and Xylitol are mixed with one another, as confirmed by the comparative tests with composition type 3, not according to the invention, is that the sweetening ability of the three-component composition according to the invention, which is equal to that of the same amount of the replaced sucrose, is not affected by the thermal treatment to which the product sweetened with said composition is submitted. The organoleptic properties of the products sweetened with the three-component composition according to the invention, although obtained after a processing entailing thermal treatment such as: baking for sponge cake, heating and cooking for pastry cream, cooling up to freezing for ice-cream, are indistinguishable from the organoleptic properties of the same products submitted to the same conditions of thermal processing, but sweetened with the same amount of sucrose. Said technical effect of achieving indistinguishable organoleptic properties for sweetened products submitted to thermal treatment is not to be found in the same products sweetened with three-component compositions, also comprising Rebaudioside A, Maltitol and Xylitol, but in weight ratios outside those of the invention: the three-component sweetener composition type 3 not according to the invention.

## Claims

1. A sweetener composition comprising a sweetening blend with at least three components selected from: Maltitol, Xylitol and Rebaudioside A, the latter having a purity between 80% and 100% by weight on the anhydrous basis, wherein:
- Rebaudioside A is present in an amount ranging from 310 to 700 ppm (parts per million) of the sweetening blend with at least three components;
- Xylitol is present in an amount ranging from 35,000 to 700,000 ppm (parts per million) of the sweetening blend with at least three components;
- Maltitol is present in an amount ranging from 320,000 to 970,000 ppm (parts per million) of the sweetening blend with at least three components;
the sum of the amounts of the three components of the sweetening blend being equal to the same amount by weight of sucrose and such as to achieve the same sweetening power as sucrose.

2. A sweetener composition according to claim 1, wherein Rebaudioside A has a purity between 90% and 100% by weight on the anhydrous basis.

3. A sweetener composition according to claim 2, wherein Rebaudioside A has a purity between 97% and 100% by weight on the anhydrous basis.

4. A sweetener composition according to claim 1, wherein:
- Rebaudioside A is present in an amount ranging from 310 to 690 ppm (parts per million) of the sweetening blend with at least three components;
- Xylitol is present in an amount ranging from 39,310 to 650,000 ppm (parts per million) of the sweetening blend with at least three components;
- Maltitol is present in an amount ranging from 349,690 to 960,000 ppm (parts per million) of the sweetening blend with at least three components;
the sum of the amounts of the three components of the sweetening blend being equal to the same amount by weight of sucrose and such as to achieve the same sweetening power as sucrose.

5. A sweetener composition according to claim 1, wherein:
- Rebaudioside A is present in an amount ranging from 590 to 690 ppm (parts per million) of the sweetening blend with at least three components;
- Xylitol is present in an amount ranging from 39,310 to 170,000 ppm (parts per million) of the sweetening blend with at least three components;
- Maltitol is present in an amount ranging from 829,410 to 960,000 ppm (parts per million) of the sweetening blend with at least three components;
or
- Rebaudioside A is present in an amount ranging from 310 to 590 ppm (parts per million) of the sweetening blend with at least three components;
- Xylitol is present in an amount ranging from 170,000 to 650,000 ppm (parts per million) of the sweetening blend with at least three components;
- Maltitol is present in an amount ranging from 349,690 to 829,410 ppm (parts per million) of the sweetening blend with at least three components;
the sum of the amounts of the three components of the sweetening blend being equal to the same amount by weight of sucrose and such as to achieve the same sweetening power as sucrose.

6. A sweetened product or a sweetened composition which is either edible or meant to be taken or ingested orally, or at any rate usable in the oral canal, such as: foods, drinks, pharmaceuticals, tobacco products, nutraceuticals and preparations for oral hygiene and/or beauty treatment, said sweetened product or composition comprising a sweetener composition according to claim 1.

7. A sweetened product or a sweetened composition according to claim 6, wherein the foods and/or drinks comprise the foods and/or drinks in the form of semifinished products and/or products ready for consumption comprising all the steps of their preparation: weighing or dosing, mixing and further processing, rising if needed, before-cooking finishing, cooking, after-cooking finishing and packaging as well as bottling, where envisaged.

8. A sweetened product or a sweetened composition according to claim 6, wherein the foods and drinks are selected from the group comprising:
a) bakery products, namely confectionery products requiring baking;
b) confectionery products prepared at temperatures from 45°C to 180°C;
c) confectionery products and drinks prepared at temperatures from 0°C to 45°C;
d) confectionery products prepared at temperatures of 0°C or less;

9. A sweetened product or a sweetened composition according to claim 8, selected from:
- BISCUITS such as: doughnuts, shortbread cookies (butter biscuits), Lady's kisses (almond pastries), meringues, ladyfingers (egg sponge cookies), petit fours, macaroons, hard almond biscuits (cantucci), traditional Monferrato biscuits "krumiri", pine nut biscuits, aniseed biscuits, orange cookies, "brutti ma buoni" biscuits, cat's tongue cookies, tartlets, "tegoline", whipped shortbread cookies; CAKES such as: sponge cakes, jam tarts, apple pies, Naples' traditional ricotta cake ("pastiera"), plumcakes, strudels, ricotta cake, yoghurt cake, almond cake, Mantua's crumbly almond cake "sbrisolona", Sachertorte, small doughnuts, cheesecakes, etc.; YEAST-RISEN PASTRY such as: traditional Christmas cake "panettone", traditional Christmas cake "pandoro", "veneziana" cake, croissants, Danish butter cookies, muffins, buns, brioches, crackers, etc.; WAFERS TO BE FILLED such as: cannoli, puff pastries, fan-shaped puff pastries, choux pastry profiterole shells, short pastry bases;
- jams and preserves, fresh pastry creams, puddings, butter creams, creams with other fats such as fully vegetable margarines, cocoa butter or blends of other fats containing percentages of olive oil, spreads, chocolate pastries, chocolate, chocolate substitutes, creams for frozen desserts, confectionery and ice-cream semifinished products (ice-cream pastes such as zabaione, custard, fruit pastes for flavouring creams and ice-creams), sterilised semifinished products, cooker-prepared dessert doughs such as dried fruit brittle and the like, marzipan and the like, decoration modelling pastes, candies, fruit jellies, nougat, chewing gums, semifinished products to be whipped for filling or decoration (UHT vegetable cream), pasteurised egg-based semifinished products, milk-based or cream-based semifinished products;
- Non-alcoholic carbonated beverages such as cola, carbonated beverages with fruit flavouring such as orange, lemon or grapefruit, tonic water, non-alcoholic sparkling wine; alcoholic carbonated beverages such as beer, flavoured beer, fizzy beverages based on concentrated must; non-alcoholic beverages such as fruit juices, drinks containing tea, coffee, cocoa, egg, natural or artificial flower flavours, mixed fruits and/or vegetables; sports drinks, energy drinks; yoghurt, drinkable yoghurt, drinks containing lactic ferments, drinks containing probiotics; alcoholic beverages based on concentrated must, hydroalcoholic solutions used for the preparation of spirits, alcoholic creams such as rum, lemon, myrtle, orange, confectionery liqueurs; powder, liquid, gel semifinished blends for manufacturing bakery products, creams, puddings, desserts and ice-creams, for both professional and household use; pre-processed products ready for baking (puff pastry and short pastry rolls), pre-proofed products ready for baking (croissants, Berliner doughnuts);
milk-based ice-creams, water-based ice-creams; frozen desserts; mousses; pre-processed products such as cannoli and puff pastries, pre-proofed products such as croissants and Berliner doughnuts; sorbets; semifinished products for finishing, filling and flavouring confectionery and ice-cream products.

10. A use of the sweetener composition according to claim 1 in order to sweeten a product or composition which is either edible or meant to be taken or ingested orally, or at any rate usable in the oral cavity, such as: foods, drinks, pharmaceuticals, tobacco products, nutraceuticals and preparations for oral hygiene and/or beauty treatment.

## Patentansprüche

1. Süßstoffzusammensetzung, umfassend eine Süßstoffmischung mit mindestens drei Komponenten, die aus Maltitol, Xylitol und Rebaudiosid A ausgewählt sind, wobei letztere zwischen 80 und 100 Gew.-% bezogen auf die Trockenmasse aufweist, wobei:
- Rebaudiosid A in einer Menge vorhanden ist, die im Bereich von 310 bis 700 ppm (Teile pro Million) der Süßstoffmischung mit mindestens drei Komponenten liegt;
- Xylitol in einer Menge vorhanden ist, die im Bereich von 35.000 bis 700.000 ppm (Teile pro Million) der Süßstoffmischung mit mindestens drei Komponenten liegt;
- Maltitol in einer Menge vorhanden ist, die im Bereich von 320.000 bis 970.000 ppm (Teile pro Million) der Süßstoffmischung mit mindestens drei Komponenten liegt;
wobei die Summe der Mengen der drei Komponenten der Süßstoffmischung gleich derselben Gewichtsmenge von Saccharose ist, sodass dieselbe Süßkraft erreicht wird wie bei Saccharose.

2. Süßstoffzusammensetzung nach Anspruch 1, wobei Rebaudiosid A eine Reinheit zwischen 90 und 100 Gew.-% bezogen auf die Trockenmasse aufweist.

3. Süßstoffzusammensetzung nach Anspruch 2, wobei Rebaudiosid A eine Reinheit zwischen 97 und 100 Gew.-% bezogen auf die Trockensubstanz aufweist.

4. Süßstoffzusammensetzung nach Anspruch 1, wobei:
- Rebaudiosid A in einer Menge vorhanden ist, die im Bereich von 310 bis 690 ppm (Teile pro Million) der Süßstoffmischung mit mindestens drei Komponenten liegt;
- Xylitol in einer Menge vorhanden ist, die im Bereich von 39.310 bis 650.000 ppm (Teile pro Million) der Süßstoffmischung mit mindestens drei Komponenten liegt;
- Maltitol in einer Menge vorhanden ist, die im Bereich von 349.690 bis 960.000 ppm (Teile pro Million) der Süßstoffmischung mit mindestens drei Komponenten liegt;
wobei die Summe der Mengen der drei Komponenten der Süßstoffmischung gleich derselben Gewichtsmenge von Saccharose ist, sodass dieselbe Süßkraft wie bei Saccharose erreicht wird.

5. Süßstoffzusammensetzung nach Anspruch 1, wobei:
- Rebaudiosid A in einer Menge vorhanden ist, die im Bereich 590 bis 690 ppm (Teile pro Million) der Süßstoffmischung mit mindestens drei Komponenten liegt;
- Xylitol in einer Menge vorhanden ist, die im Bereich von 39.310 bis 170.000 ppm (Teile pro Million) der Süßstoffmischung mit mindesten drei Komponenten liegt;
- Maltitol in einer Menge vorhanden ist, die im Bereich von 829.410 bis 960.000 ppm (Teile pro Million) der Süßstoffmischung mit mindestens drei Komponenten liegt;
oder
- Rebaudiosid A in einer Menge vorhanden ist, die im Bereich von 310 bis 590 ppm (Teile pro Million) der Süßstoffmischung mit mindestens drei Komponenten liegt;
- Xylitol in einer Menge vorhanden ist, die im Bereich von 170.000 bis 650.000 ppm (Teile pro Million) der Süßstoffmischung mit mindestens drei Komponenten liegt;
- Maltitol in einer Menge vorhanden ist, die im Bereich von 349.690 bis 829.410 ppm (Teile pro Million) der Süßstoffmischung mit mindestens drei Komponenten liegt;
wobei die Summe der Mengen der drei Komponenten der Süßstoffmischung gleich derselben Gewichtsmenge von Saccharose ist, sodass dieselbe Süßkraft wie bei Saccharose erreicht wird.

6. Gesüßtes Produkt oder gesüßte Zusammensetzung, die entweder essbar ist oder oral zu verabreichen oder einzunehmen ist oder auf jeden Fall im oralen Kanal verwendbar ist wie: Nahrungsmittel, Getränke, Medikamente, Tabakprodukte, Nahrungsergänzungsmittel und Präparate für Mundhygiene und/oder Schönheitspflege, wobei das gesüßte Produkt oder die gesüßte Zusammensetzung eine Süßstoffzusammensetzung nach Anspruch 1 umfasst.

7. Gesüßtes Produkt oder gesüßte Zusammensetzung nach Anspruch 6, wobei die Nahrungsmittel und/oder Getränke die Nahrungsmittel und/oder Getränke in der Form von Halbfertigprodukten und/oder verzehrfertigen Produkten umfassen, die alle Schritte ihrer Herstellung umfassen: Wiegen oder Dosieren, Mischen und Weiterverarbeiten, nötigenfalls Aufgehen, Veredlung vor dem Kochen, Kochen, Veredlung nach dem Kochen und Verpacken sowie Abfüllen in Flaschen, wenn geplant.

8. Gesüßtes Produkt oder gesüßte Zusammensetzung nach Anspruch 6, wobei die Nahrungsmittel und Getränkte aus der Gruppe ausgewählt sind, umfassend:
a) Bäckereiprodukte, nämlich Süßwarenprodukte, die Backen erfordern;
b) Süßwarenprodukte, die bei Temperaturen von 45 °C bis 180 °C hergestellt werden;
c) Süßwarenprodukte und Getränke, die bei Temperaturen von 0 °C bis 45 °C hergestellt werden:
d) Süßwarenprodukte, die bei Temperaturen von 0 °C oder darunter hergestellt werden.

9. Gesüßtes Produkt oder gesüßte Zusammensetzung nach Anspruch 8, ausgewählt aus:
- KLEINGEBÄCK wie: Krapfen, Shortbread Cookies (Butterkekse), Lady's kisses (Mandelgebäck), Baisers, Löffelbiskuits (Biskuitteig), Petit Fours, Makronen, harten Mandelplätzchen (cantucci), traditionellen Monferrato-Plätzchen, "krumiri", Pinienkernenplätzchen, Anisplätzchen, Orangenplätzchen, "brutti-ma-buoni"-Plätzchen, Katzenzungenplätzchen, Törtchen, "tegoline", locker gebackene Shortbread-Plätzchen; KUCHEN wie: Biskuitkuchen, Marmeladetorten, Apple Pies (gedeckte Apfelkuchen), Neapels traditionellem Ricotta-Kuchen ("Pastiera"), Pflaumenkuchen, Strudel, Ricottakuchen, Joghurtkuchen, Mandelkuchen, Mantuas mürbem Mandelkuchen "Sbrisolona,", Sachertorte, kleinen Krapfen, Käsekuchen usw.; HEFEGEBÄCK wie: traditionellem Weihnachtskuchen "Panettone", traditionellem Weihnachtskuchen "Pandoro", "Veneziana"-Kuchen, Hörnchen, dänischem Buttergebäck, Muffins, Korinthenbrötchen, süßen Brötchen, Kräckern usw.; ZU FÜLLENDEN DÜNNEN TEIGWAREN wie: Cannoli, Blätterteiggebäck, fächerförmigem Blätterteiggebäck, Windbeutel aus Brandteig, Mürbeteigböden;
- Marmeladen und Konfitüren, frischen Tortensahnen, Puddings, Buttercremes, Cremes mit anderen Fetten wie ausschließlich pflanzlichen Margarinesorten, Kakaobutter oder Mischungen von anderen Fetten, die Olivenölanteile enthalten, Aufstrichen, Schokoladengebäck, Schokolade, Schokoladenersatzstoffen, Cremes für gefrorene Desserts, Gebäck- und Speiseeis-Halbfertigprodukten (Speiseeispasten wie Zabaione, Vanillepudding, Fruchtpasten zum Aromatisieren von Cremes und Speiseeisen), sterilisierten, halbfertigen Produkte, für den Herd vorbereitete Dessertteigen wie Trockenobstkrokant und dergleichen, Marzipan und dergleichen, Dekorationsmodellierpasten, Bonbons, Fruchtgummis, Nougat, Kaugummis, Halbfertigprodukten, die zum Füllen oder Dekorieren geschlagen werden müssen (ultrahocherhitzte pflanzliche Sahne), pasteurisierten Halbfertigprodukten auf Eierbasis, milchbasierten oder sahnebasierten Halbfertigprodukten;
- alkoholfreien, kohlensäurehaltigen Getränke wie Cola, kohlensäurehaltigen Getränken mit Fruchtgeschmack wie Orange, Zitrone oder Pampelmuse, Tonicwater, alkoholfreiem Schaumwein, alkoholischen kohlenstoffhaltigen Getränken wie Bier, aromatisiertem Bier, Sprudelgetränken auf der Basis von konzentriertem Traubenmost; alkoholfreien Getränken wie Obstsäften, Getränken, die Tee, Kaffee, Kakao, Ei, natürliche oder künstliche Blumenaromen, gemischtes Obst und bzw. oder Gemüse enthalten; Sportgetränken, Energiegetränken; Joghurt, trinkbarem Joghurt, Getränken, die Milchfermente enthalten, Getränken, die Probiotika enthalten; alkoholischen Getränken auf der Basis von konzentriertem Traubenmost, hydroalkoholischen Lösungen, die für die Herstellung von Spirituosen verwendet werden, alkoholischen Cremes wie Rum-, Zitronen-, Myrte-, Orangen-, Gebäcklikören; halbfertigen pulverförmigen, flüssigen, gelförmigen Mischungen für die Herstellung von Bäckereiprodukten, Cremes, Puddings, Desserts und Speiseeisen sowohl für den professionellen als auch Hausgebrauch; vorverarbeiteten, backfertigen Produkte (Blätterteig- und Mürbeteigrollen), vorgetriebenen, backfertigen Produkte (Hörnchen, Berliner Krapfen); milchbasierten Speiseeisen, wasserbasierten Speiseeisen; gefrorenen Desserts; Mousses; vorverarbeiteten Produkten wie Cannoli und Blätterteige, vorgetriebenen Produkten wie Hörnchen und Berliner Krapfen; Fruchteis, Halbfertigprodukten zum Veredeln, Füllen und Aromatisieren von Gebäck und Speiseeisprodukten.

10. Verwendung der Süßstoffzusammensetzung nach Anspruch 1, zum Süßen eines Produktes oder einer Zusammensetzung, die entweder essbar ist oder oral verabreicht oder eingenommen werden soll oder mindestens in der Mundhöhle anwendbar ist wie: Nahrungsmittel, Getränke, Medikamente, Tabakprodukte, Nahrungsergänzungsmittel und Präparate für Mundhygiene und/oder Schönheitspflege.

## Revendications

1. Composition d'édulcorant comprenant un mélange édulcorant avec au moins trois composants choisis parmi : le maltitol, le xylitol et le rébaudioside A, ce dernier ayant une pureté comprise entre 80 % et 100 % en poids sur la base anhydre, dans laquelle :
- le rébaudioside A est présent en une quantité allant de 310 à 700 ppm (parties par million) du mélange édulcorant avec au moins trois composants ;
- le xylitol est présent en une quantité allant de 35 000 à 700 000 ppm (parties par million) du mélange édulcorant avec au moins trois composants ;
- le maltitol est présent en une quantité allant de 320 000 à 970 000 ppm (parties par million) du mélange édulcorant avec au moins trois composants ;
la somme des quantités des trois composants du mélange édulcorant étant égale à la même quantité en poids de saccharose et de nature à atteindre le même pouvoir édulcorant que le saccharose.

2. Composition d'édulcorant selon la revendication 1, dans laquelle le rébaudioside A a une pureté comprise entre 90 % et 100 % en poids sur la base anhydre.

3. Composition d'édulcorant selon la revendication 2, dans laquelle le rébaudioside A a une pureté comprise entre 97 % et 100 % en poids sur la base anhydre.

4. Composition d'édulcorant selon la revendication 1, dans laquelle :
- le rébaudioside A est présent en une quantité allant de 310 à 690 ppm (parties par million) du mélange édulcorant avec au moins trois composants ;
- le xylitol est présent en une quantité allant de 39 310 à 650 000 ppm (parties par million) du mélange édulcorant avec au moins trois composants ;
- le maltitol est présent en une quantité allant de 349 690 à 960 000 ppm (parties par million) du mélange édulcorant avec au moins trois composants ;
la somme des quantités des trois composants du mélange édulcorant étant égale à la même quantité en poids de saccharose et de nature à atteindre le même pouvoir édulcorant que le saccharose.

5. Composition d'édulcorant selon la revendication 1, dans laquelle :
- le rébaudioside A est présent en une quantité allant de 590 à 690 ppm (parties par million) du mélange édulcorant avec au moins trois composants ;
- le xylitol est présent en une quantité allant de 39 310 à 170 000 ppm (parties par million) du mélange édulcorant avec au moins trois composants ;
- le maltitol est présent en une quantité allant de 829 410 à 960 000 ppm (parties par million) du mélange édulcorant avec au moins trois composants ;
ou
- le rébaudioside A est présent en une quantité allant de 310 à 590 ppm (parties par million) du mélange édulcorant avec au moins trois composants ;
- le xylitol est présent en une quantité allant de 170 000 à 650 000 ppm (parties par million) du mélange édulcorant avec au moins trois composants ;
- le maltitol est présent en une quantité allant de 349 690 à 829 410 ppm (parties par million) du mélange édulcorant avec au moins trois composants ;
la somme des quantités des trois composants du mélange édulcorant étant égale à la même quantité en poids de saccharose et de nature à atteindre le même pouvoir édulcorant que le saccharose.

6. Produit édulcoré ou composition édulcorée qui est soit comestible, soit destiné(e) à être pris(e) ou ingéré(e) par voie orale, ou en tout cas utilisable dans le canal oral, tel(le) que : des aliments, boissons, produits pharmaceutiques, produits du tabac, nutraceutiques et préparations pour l'hygiène buccale et/ou un traitement de beauté, ledit produit ou ladite composition édulcoré(e) comprenant une composition d'édulcorant selon la revendication 1.

7. Produit édulcoré ou composition édulcorée selon la revendication 6, dans lequel/laquelle les aliments et/ou boissons comprennent les aliments et/ou boissons sous forme de produits semi-finis et/ou de produits prêts à la consommation comprenant toutes les étapes de leur préparation : pesage ou dosage, mélange et traitement ultérieur, levage éventuel, finition avant cuisson, cuisson, finition après cuisson et conditionnement ainsi que mise en bouteille, le cas échéant.

8. Produit édulcoré ou composition édulcorée selon la revendication 6, dans lequel/laquelle les aliments et boissons sont choisis dans le groupe comprenant :
a) des produits de boulangerie, à savoir des produits de pâtisserie nécessitant une cuisson ;
b) des produits de pâtisserie préparés à des températures de 45 °C à 180 °C ;
c) des produits de pâtisserie préparés à des températures de 0 °C à 45 °C ;
d) des produits de pâtisserie préparés à des températures de 0 °C ou moins.

9. Produit édulcoré ou composition édulcorée selon la revendication 8, choisi(e) parmi :
- des BISCUITS tels que : des beignets, biscuits sablés (biscuits au beurre), baisers de dame (pâtisserie à l'amande), meringues, boudoirs (par exemple, biscuits éponge), petits fours, macarons, biscuits durs aux amandes (cantucci), biscuits « krumiri » de Monferrat traditionnels, biscuits aux pignons, biscuits à l'anis, biscuits à l'orange, biscuits « brutti ma buoni », biscuits langue de chat, tartelettes, « tegoline », biscuits sablés fouettés ; des GÂTEAUX tels que : des gâteaux éponge, tartes à la confiture, tartes aux pommes, gâteau à la ricotta traditionnelle de Naples (« pastiera »), gâteaux aux prunes, strudels, gâteau à la ricotta, gâteau au yaourt, gâteau aux amandes, gâteau aux amandes pilées de Mantoue « sbrisolona », Sachertorte, petits beignets, gâteaux au fromage, etc. ; des PÂTISSERIES À PÂTE LEVÉE telles que : des gâteaux traditionnels de Noël « panettone », gâteau traditionnel de Noël « pandoro », gâteau « veneziana », croissants, biscuits au beurre danois, muffins, petits pains, brioches, craquelins, etc. ; des GAUFRETTES À FOURRER telles que : des cannoli, feuilletés, feuilletés en éventail, profiteroles en pâte à choux, fonds de pâte brisée ;
- des confitures et conserves, crèmes pâtissières, poudings, crèmes au beurre, crèmes contenant d'autres matières grasses telles que les margarines entièrement végétales, beurre de cacao ou mélanges d'autres matières grasses contenant des pourcentages d'huile d'olive, pâtes à tartiner, pâtisseries au chocolat, chocolat, substituts de chocolat, crèmes pour desserts congelés, produits semi-finis de pâtisserie et à base de crème glacée (pâtes à crème glacée telles que sabayon, crème anglaise, pâtes de fruits pour crèmes aromatisantes et crèmes glacées), produits semi-finis stérilisés, pâtes à desserts préparées par autocuiseur telles que les fruits secs et similaires, massepain et similaires, pâtes de modelage de décoration, bonbons, gelées de fruits, nougats, gommes à mâcher, produits semi-finis à fouetter de garnissage ou de décoration (crème végétale UHT), produits semi-finis à base d'oeufs pasteurisés, produits semi-finis à base de lait ou de crème ;
- des boissons gazeuses non alcoolisées telles que le cola, boissons gazeuses aux arômes de fruits tels que l'orange, le citron ou le pamplemousse, eau tonique, vin mousseux non alcoolisé ; des boissons gazeuses alcoolisées telles que la bière, bière aromatisée, boissons gazeuses à base de moût concentré ; des boissons non alcoolisées telles que les jus de fruits, boissons contenant du thé, du café, du cacao, des oeufs, des arômes de fleurs naturels ou artificiels, des fruits mélangés et/ou des légumes ; des boissons pour sportifs, boissons énergisantes ; des yaourts, yaourts à boire, boissons contenant des ferments lactiques, boissons contenant des probiotiques ; des boissons alcoolisées à base de moût concentré, solutions hydroalcooliques utilisées pour la préparation de spiritueux, crèmes alcoolisées telles que les liqueurs de rhum, de citron, de myrte, d'orange, de pâtisserie ; des mélanges semi-finis de poudres, de liquides et de gels pour la fabrication de produits de boulangerie, de crèmes, de poudings, de desserts et de crèmes glacées, à la fois à usage professionnel et domestique ; des produits prétraités prêts pour la cuisson (feuilletés et roulés de pâte brisée), produits précuits prêts pour la cuisson (croissants, boules de Berlin) ;
- des crèmes glacées à base de lait, crèmes glacées à base d'eau ; des desserts glacés ; des mousses ; des produits prétraités tels que les cannoli et feuilletés, produits précuits tels que les croissants et boules de Berlin ; des sorbets ; des produits semi-finis pour les produits de pâtisserie et à base de crème glacée de finition, de garnissage et d'aromatisation.

10. Utilisation de la composition d'édulcorant selon la revendication 1 pour édulcorer un produit ou une composition qui est soit comestible, soit destiné(e) à être pris(e) ou ingéré(e) par voie orale, ou en tout cas utilisable dans la cavité orale, tel(le) que : des aliments, boissons, produits pharmaceutiques, produits du tabac, nutraceutiques et préparations pour l'hygiène buccale et/ou un traitement de beauté.
